(19) **Europäisches Patentamt / European Patent Office / Office européen des brevets**

(11) **EP 3 857 944 B1**

(12) **EUROPEAN PATENT SPECIFICATION**

(45) Date of publication and mention
of the grant of the patent:
**09.04.2025 Bulletin 2025/15**

(21) Application number: **19752725.2**

(22) Date of filing: **16.08.2019**

(51) International Patent Classification (IPC):
*H04W 24/08* (2009.01)    *H04W 56/00* (2009.01)
*H04W 72/54* (2023.01)    *H04W 88/04* (2009.01)

(52) Cooperative Patent Classification (CPC):
**H04W 24/08; H04W 56/0035; H04W 72/54;**
H04W 88/04

(86) International application number:
**PCT/EP2019/072054**

(87) International publication number:
**WO 2020/064215 (02.04.2020 Gazette 2020/14)**

(54) **ENHANCEMENTS FOR URLLC SPS TO COPE WITH TIMING DRIFTS BETWEEN A WIRELESS NETWORK AND A UE-SIDE APPLICATION**

VERBESSERUNGEN FÜR URLLC-SPS ZUM MEISTERN VON ZEITDRIFTS ZWISCHEN EINEM DRAHTLOSEN NETZWERK UND EINER BENUTZERGERÄTESEITIGEN ANWENDUNG

AMÉLIORATIONS PERMETTANT À DES SPS URLLC DE S'ADAPTER À DES DÉCALAGES DE SYNCHRONISATION ENTRE UN RÉSEAU SANS FIL ET UNE APPLICATION CÔTÉ UE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2018 EP 18197382**

(43) Date of publication of application:
**04.08.2021 Bulletin 2021/31**

(73) Proprietor: **Fraunhofer-Gesellschaft zur Förderung
der angewandten Forschung e.V.
80686 München (DE)**

(72) Inventors:
• **HASSAN, Khaled Shawky
91058 Erlangen (DE)**

• **HEYN, Thomas
91058 Erlangen (DE)**
• **SCHLICHTER, Thomas
91058 Erlangen (DE)**
• **KARUNAKARAN, Prasanth
91058 Erlangen (DE)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(56) References cited:
**WO-A1-2016/019555**    **WO-A1-88/05987**
**WO-A2-02/059638**    **US-A1- 2014 075 235**
**US-A1- 2015 189 589**

**Description**

The present document refers to wireless communications (e.g., between a user equipment, UE, and a base station, BS, which may be a gNB).

For example, the invention refers to enhancements for URLLC SPS or CGs (configured grants) to cope with timing drifts between a wireless network and a UE-side application.

WO 02/059638 A2 relates to a technique for position determination in a wireless communication system with detection and compensation. Repeaters are not user equipments and are not associated to any local device. There is no definition of first and second active configurations and of any possibility of switching to a particular active configuration.

WO 2016/019555 A1 discloses a technique to obtain channel state information measurements.

**Overview**

Examples below refer, inter alia, to enhancements for URLLC semi-presentence scheduling (SPS) and/or configured grants (CG), e.g., to cope with timing drifts between a wireless network and a UE-side application.

The SPS is defined as a configured resources configured in Time (including time offset and periodicity) and frequency (including frequency resources); the SPS mainly consider UL/DL transmission for LTE and only DL for NR.

The Configured grants (CG) as a configured resources configured in Time (including time offset and periodicity) and frequency (including frequency resources); the CG mainly consider UL transmission. In this document, we used both terms interchangeably.

Examples and aspects herein below relate to strategies and techniques for wireless networks, devices and/or communications (e.g., LTE, 5G, etc.), e.g., in radio frequencies or ultrasounds, etc.

Wireless communications permit the exchange of transmissions between transmitters and receivers without interposition of electrical wires.

Wireless communications suffer of several impairments, such as a reduced reliability as it is not possible to always guarantee that transmissions are properly received by the receiver. Further, there is the necessity of establishing rules (e.g., protocols) for coordinating the transmissions and the receptions.

For example, it is necessary to establish rules for avoiding that two nodes of the network transmit simultaneously or, in case of this occurrence, to develop techniques for solving collisions. Scheduling operations are known for these purposes (e.g., to distribute granted resources to different UEs).

Examples below and above may also refer to methods, which may be obtained, for example, by replacing functional elements with method steps, e.g. at least in some cases obtained with the equipment below.

Examples below may refer to computer programs and instructions which, when executer by a processor, may perform at least some of the methods below or implement at least some of the functions below.

The claims also define examples of the invention, which may cover or supplement examples described in the description. The text in squared or round brackets also create examples which supplement and/or integrate the examples not defined in squared brackets.

Examples below may relate, for example, to wireless communications (e.g., with electromagnetic waves, e.g., in radiofrequency).

In general terms, a UE (or a couple of UEs) may serve an internet of things, IOT, application (or another application in which the control is explicated via a wireless network). A first UE may be associated to and receive data from a sensor, while a second (remote) UE may be associated to and send data to an actuator. In another example, a first UE may be associated to a physical system (e.g., including sensor and actuator), while a second UE (or physical control system) may be associated to a controller of the physical system. Here, the second UE (or physical control system) may obtain sensed data from the first UE and may transmit command data to the first UE, so as to control the physical system. According to another example, the first UE is associated to a physical system, and the second UE (or monitoring system) may simply monitor the functioning of the physical system and receive data for monitoring the operations at the physical system. For these applications, URLLC may be used, e.g., with SPS scheduling or with CGs. In general terms, it is here mostly referred to the operations of the first UE, e.g., the UE which is at the side of the physical system or that collects data and send them in UL (e.g., to the BS, which may be a gNB). Subsequently, it is intended that the data is to be transmitted to the BS and that the BS will retransmit to any other system according to the specific communication. Further, it is her imagined that the UE is associated to (in proximity with) an external device, which is the device which obtains data packets from the physical system and provides the data packets to the UE, so that the UE retransmit the data packets to the BS.

Hence, several data may be sequentially obtained by the UE from the external device. These packets are to be periodically sent in UL according to the scheduling. However, it has been noted that the external device and the UE are not always synchronized with each other. The time periods of the transmissions from the UE are not necessarily the same of the time period for the periodic reception (arrival) of the data packets from the external device. For example, this may occur because of the UE having a timing (clock) module different from the timing (clock) module of the external device, so that the timings of the UE and of the external device drift. Therefore, there may occur the undesired situation in which the external device provides a data packet too late, so that the UE cannot respect the scheduling (the UE loses the "transmission occasion", TO). In cases like this, even if the scheduling grants a resource to a particular data packet, the data packet is not prepared in time and cannot be transmitted at the granted resource. Therefore, an unwanted "hole" in the communication could be generated.

It is also noted that the UE may serve, in real time, multiple services (e.g., for the same external device). An example may be a first service for providing a first measurement (e.g., voltage, or any other data measurement provided by a first sensor) and a second service for providing a second measurement (e.g., current, or any other data measurement provided by a second sensor). Further, while a first service may refer to measurement data, a second service may provide control data for controlling the physical system (these control data are not to be understood as signalling for the communication, but data providing information on the status of the controlled or measured physical system). Even in this case, there may happen that, because of internal functioning of the external device (e.g., internal queues, operating system, bugs, malfunctions, etc.), some packets are provided to the UE too late with respect to the foreseen scheduling. Even in this case, an unwanted "hole" in the communication could be generated. Multiple, subsequent holes may also be generated.

Techniques are requested to cope with these inconveniences.

## Summary

The invention is defined in the independent claims.

## Figures

Fig. 1 shows a general example of a device.

Fig. 2 shows a scheme according to an example.

Figs. 2.1.1 and 2.1.2 show graphics according to examples.

Figs. 2.2.1 and 2.2.2 shows a base station and a system, respectively, according to examples.

Figs. 2.3.1, 2.3.2, 2.4.1, 2.4.2, 2.4.3, 2.5.1, and 2.5.2 show communication diagrams according to examples.

Figs. 2.6 and 3 show methods according to examples.

## General example

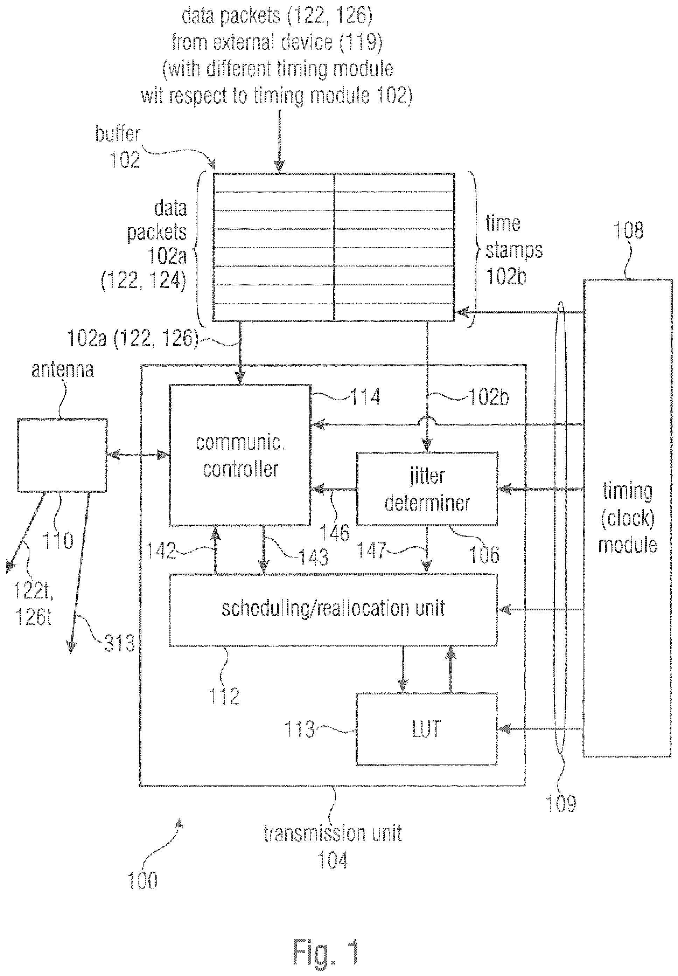

The invention made is disclosed in the embodiment referring to figure 1.

Fig. 1 shows a general example 100 of a UE according to the invention. The UE may be, for example, a mobile phone, a smartphone, a tablet, a personal computer, a portable computer, etc. The UE 100 may comprise a transmission unit 104 which may operate communications with a BS (not shown, but which may be a gNB) through an antenna 110 (here represented as external to the transmission unit 104).

The UE 100 may comprise a communication controller 114 (e.g., a transceiver), which may control the antenna 100 for transmitting (and, in some cases, also receiving) data packets 122, 126.

The UE 100 may comprise and/or be associated to a buffer 102 (e.g., a memory, a storage, etc.). The buffer 102 may be input with data packets 122, 126 from an external device 119. The external device 119 may be a local device. The external device 119 may be connected to the buffer 102 through electric connections and/or non-wireless connections. The external device 102 may have some capacities of obtaining data from a physical system, and task of the UE 100 is to send the data packet to the BS (and to another computer device, such as another UE, for example, for performing a distributed control on the physical system or on a distributed physical system). The data packets 122, 126 may be understood as information to be sent to a remote device, and may be processed and/or manipulated by the external device 119 and/or by the UE 100 and/or by any intermediate device which could be inserted.

The buffer 102 is here represented as having a plurality (e.g. two) columns, a first column for carrying data (e.g., measurements) 102a (which may therefore correspond to the packets 122, 126), and a second column for carrying time stamps 102b. The time stamps 102b may be associated, for example, to the time instant in which a data packet 122, 126 has arrived at the buffer 102. The buffer 102 may also comprise other information, such as an identifier field for identifying the particular data packet arrive from the external device 119.

The buffer 102 may provide the data packets 122, 126 (e.g., stored as 102a) to the communication controller 114, so that the letter may transmit the data packets, according to the scheduling, to the BS.

The UE 100 may comprise a timing module 108 (e.g., clock), which may comprise, for example, a phase locked loop, PLL, device. The timing module 108 may synchronize (e.g. through synchronization signal 109) the elements of the UE 100, but may be seen as being in general incapable of synchronizing the UE 100 with the external device 119.

The UE 100 may comprise a scheduling/reallocation unit 112, which may define the scheduling 142 (and redefine it on the fly). The scheduling/reallocation unit 112 may define the scheduling 142 on the basis of a handshaking with the BS (the signalling from the BS being indicated with 143) and/or on the basis of other information. The scheduling may be associated to a scheduling period, a subdivision among grants (e.g., time slots), frequencies, etc., each resource (frequency, time slot, etc.) being associated to a particular information to be provided (e.g., data packet 122, 126, etc., control signalling, DL data, etc.) and, in some cases, may define resources also for different UEs (e.g., mobile phones which happen to be in the neighbourhood of the UE 100). The scheduling 142 may be synchronized with the synchronization signal 109 provided by the timing module 108, and is in general non-synchronized with the external device 119 providing the data packets 122, 126. Each scheduling period of the scheduling 142 may be associated to a particular offset and to a particular time granularity.

The UE 100 may comprise a lookup table, LUT, 113 which is accessible from at least the scheduling/reallocation unit 112. In the LUT 113, scheduling data and/or other information may be stored.

The UE 100 may include a jitter determiner 106. The jitter determiner 106 may check whether the timing of the data packets 122, 126 arrived to the buffer 102 is compliant with the scheduling 142. For example, the jitter determiner 106 may check the time stamps 102b of the arrived data packets 122, 126 and may determine whether the latter have arrived in time for being transmitted according to the current scheduling.

Accordingly, the jitter determiner 106 may obtain jitter information 146, 147. Jitter information may be understood as delay information, regarding the delay of the arrival of the data packets 122, 126 with respect to the expected times of arrival.

In some examples, the jitter determiner 106 may provide jitter information 147 to the scheduling/reallocation unit 112. This operation may be carried out, for example, for causing the scheduling/reallocation unit 112 to perform a reallocation operation, for example.

In addition or in alternative, the jitter determiner 106 may provide jitter information 146 to the communication controller 146. This operation may be carried out, for example, for informing the BS of the delay in the arrival of the data packet 122, 126, and/or to request, in some cases, modifications to the scheduling.

In general terms, the UE 100 may, on the basis of the jitter information 146, 147 obtained by the jitter determiner, modify or request the modification of the transmission configuration (e.g., associated to the scheduling). For example, the UE's transmissions may be moved from a first active configuration (e.g., associated to a first scheduling) to a second active configuration (e.g., associated to a second scheduling). The first and second active configurations may differ from each other by any of the scheduling properties (e.g., at least one of allocated time slots, frequencies, length of the scheduling period, offset and granularity of the scheduling, etc.).

It is not strictly necessary for the UE to comprise the buffer, the transmission unit, and the delay or jitter determiner, or any other of the hardware and functional components discussed above and/or below. Notwithstanding, reference is made to these components for the sake of simplicity.

The UE may be adapted to:

receive data packets (122, 126);

transmit the data packets (142) according to a scheduling which allocates transmission resources in a determined time period;

determine a delay or jitter information (146) between the reception of a data packet (122, 126) in the buffer (102) and the transmission of the data packet.

It will be shown that the UE may modify the transmission configuration to switch from a first active configuration to a second active configuration.

It will be also shown that the UE may transmit at least one of the delay information (146) or jitter information (146) and a request (313), the request being at least one of a scheduling modification request, a configuration modification request, a feedback information, and an additional configuration request, so as to modify the transmission configuration and/or the scheduling.

## Transmission operations

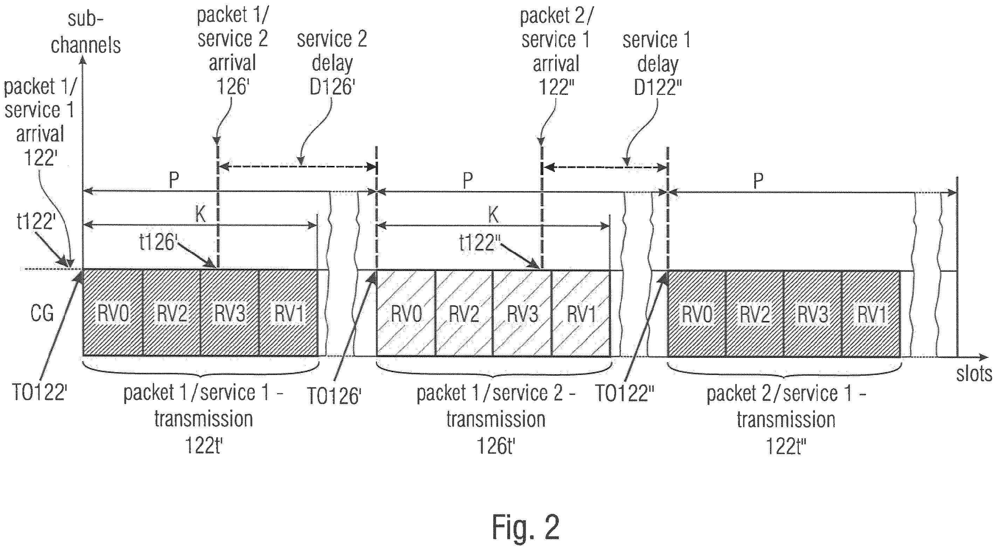

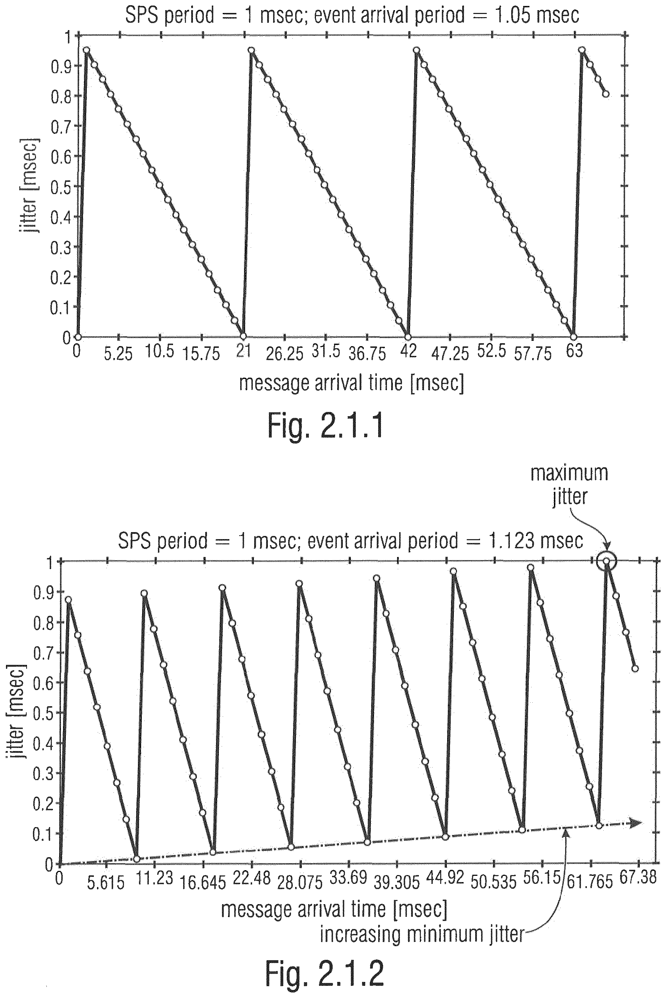

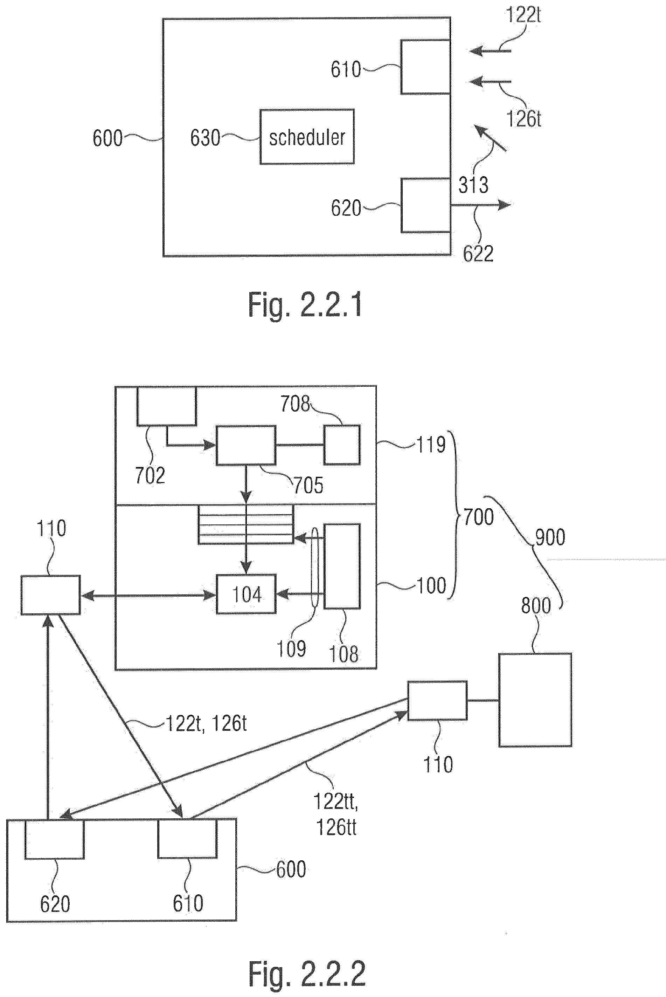

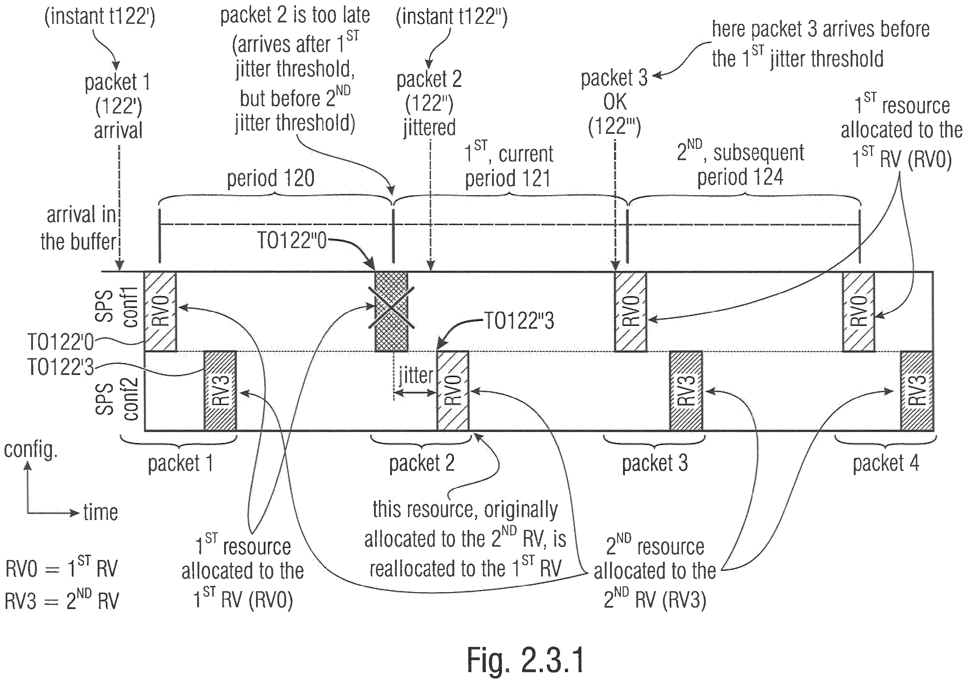

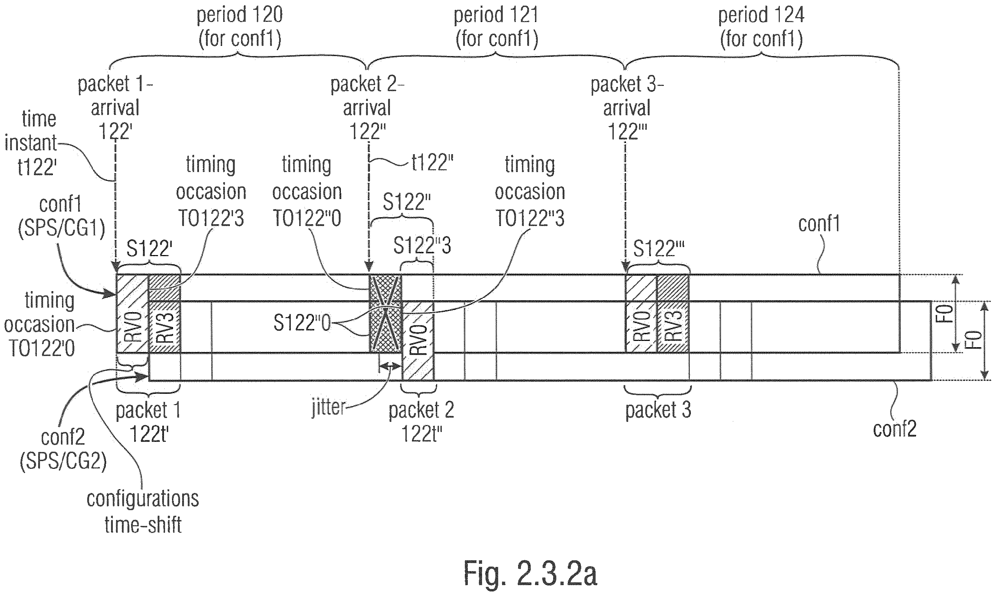

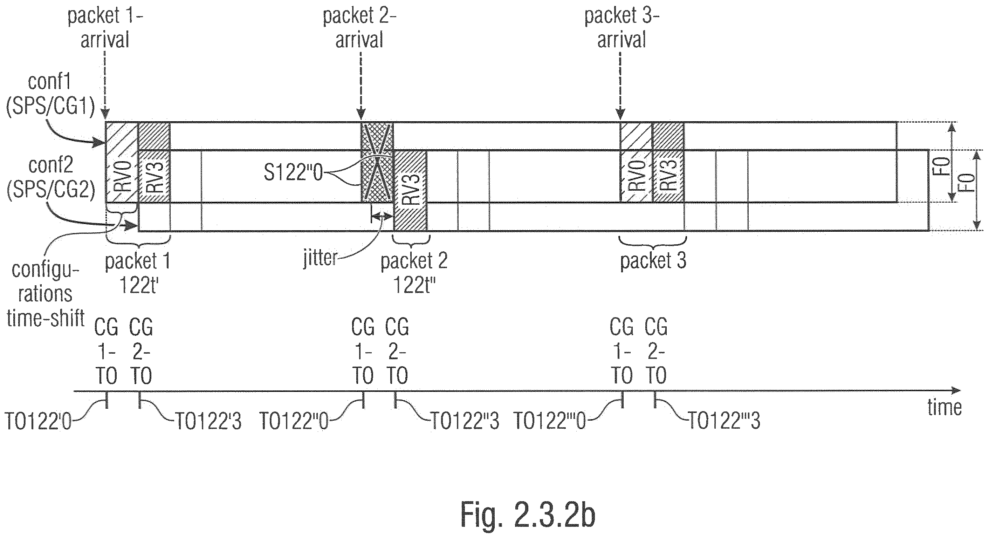

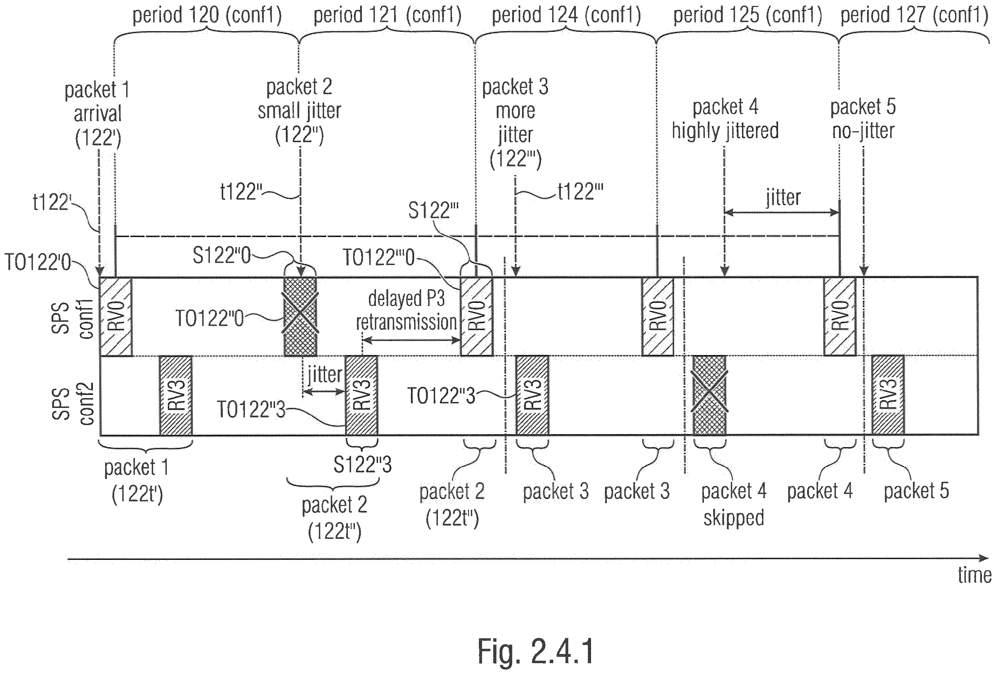

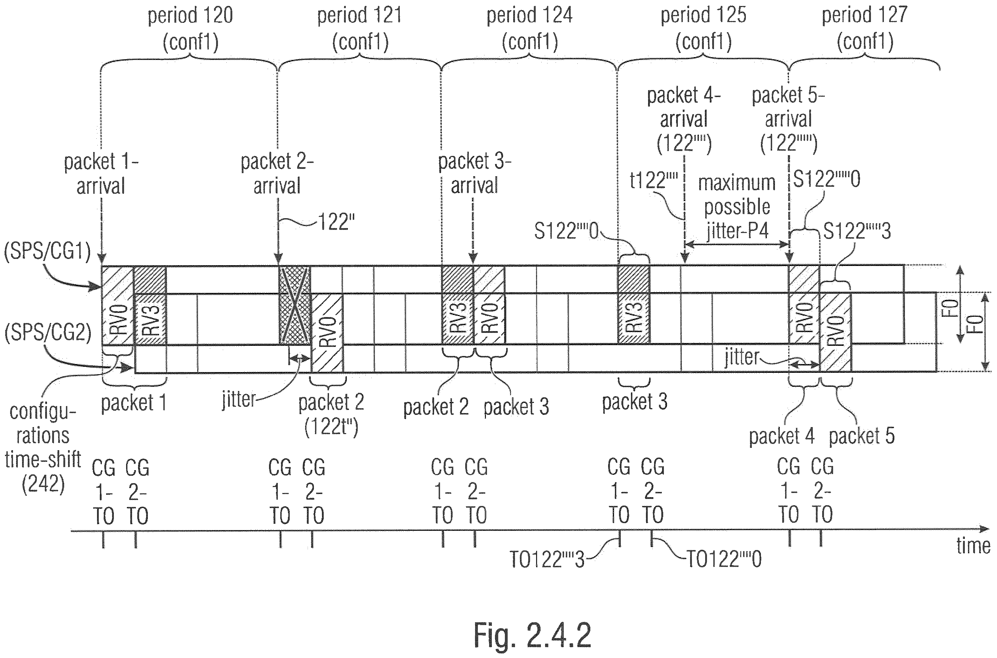

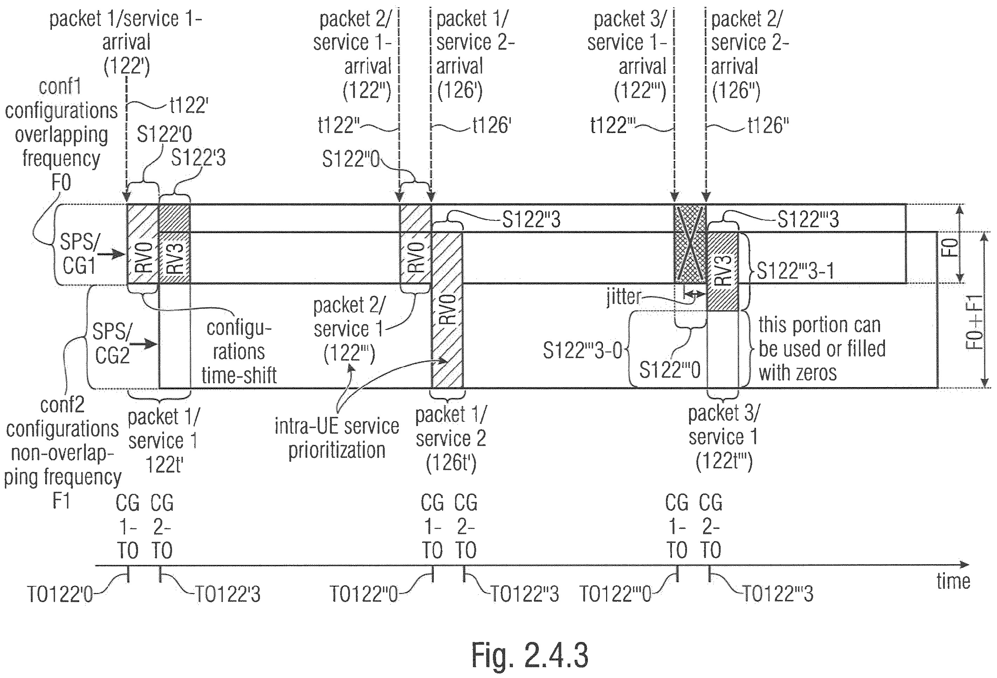

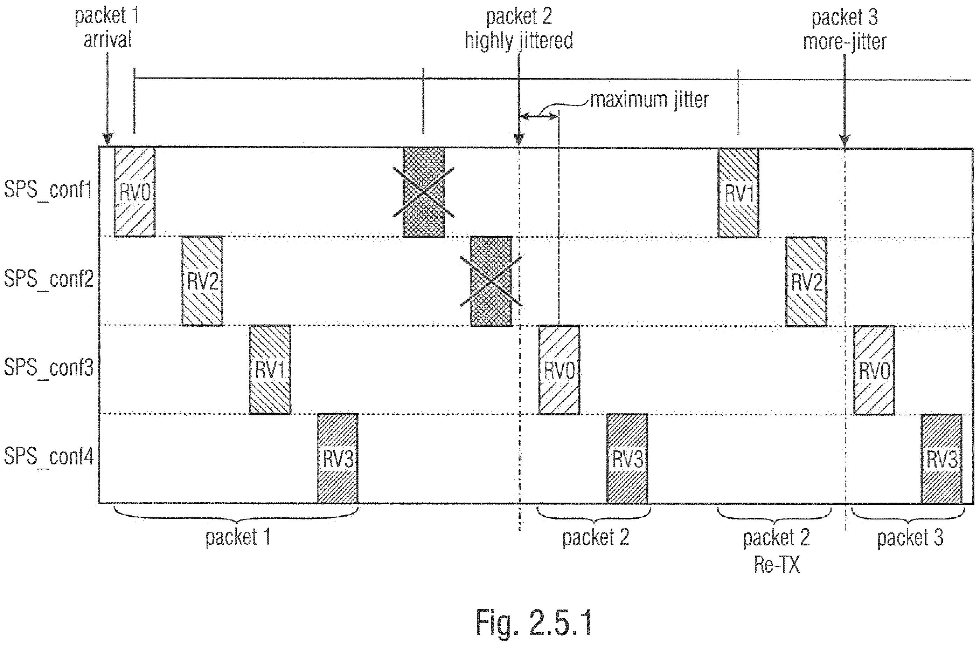

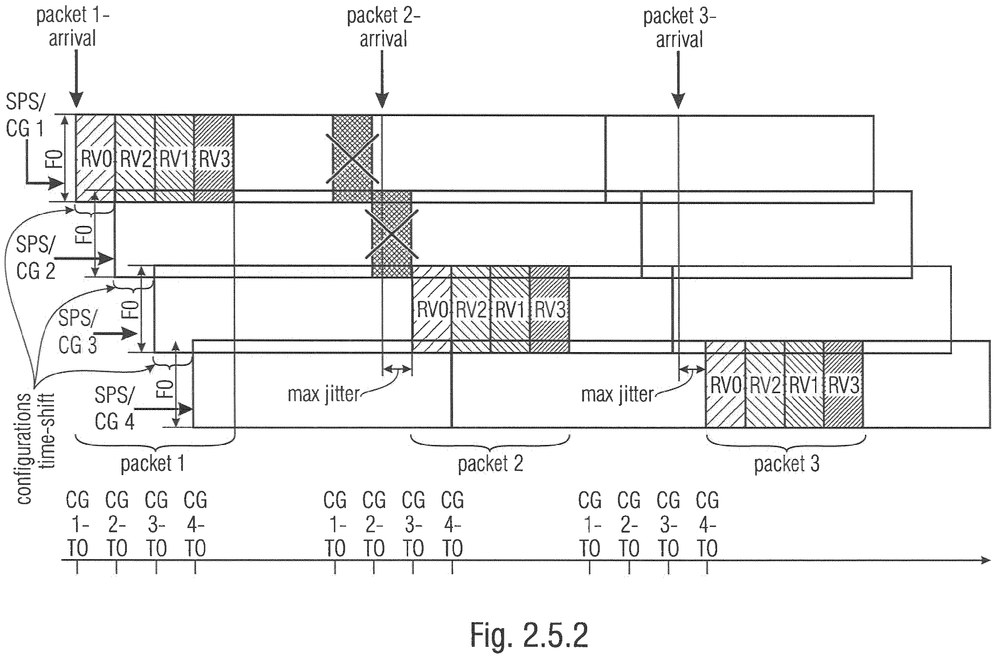

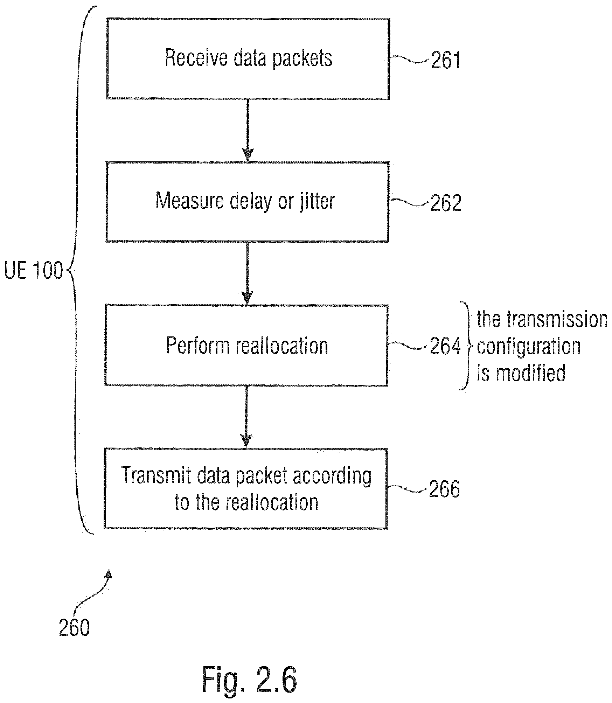

The time diagram of Fig. 2 shows a plurality of consecutive scheduling time periods P (120, 121, 124, etc.), each of which may be associated to a particular data packet 122, 126 to be transmitted in UL. Packets 122 are first data packets 122 associated to a first service (e.g., measurements on physical magnitudes) and packets 126 are second data packets 126 associated to a second service (e.g., other measurements on other physical magnitudes or control data for governing the distributed physical system). The packets 122, 126, are respectively instantiated by periodically arriving packets 122', 122", 122''', and 126', 126", 126''', etc. The arriving time of each packet 122, 126 as received by the buffer 102 is indicated with 122t, 126 (e.g., the arriving time of packet 122' is t122', the arriving time of packet 122" is t122", and the arriving time of packet 122" is t122"). The arriving packets 122, 126 are respectively retransmitted, by the communication controller 114 and the antenna 110, as wireless transmissions 122t, 126t (e.g., the arriving packet 122' is retransmitted as 122t', the arriving packet 122" is retransmitted as 122t", and the arriving packet 122" is retransmitted as 122t"). the time necessary for retransmitting one packet is indicated with K.

In this case, a first instantiation 122' of the first data packet (packet 1/service 1) arrives at the buffer 102 at time instant t122'. According to the scheduling, at the subsequent instant TO122' there is a possibility (transmissions occasion) for transmitting the data packet 122': the transmission 122t' is therefore performed by the communication controller 114 and the antenna 110 starting from instant TO122'.

During the transmission of the data packet 122', at instant t126' the buffer 102 receives a first instantiation 126' of the second data packet (packet 1/service 2). According to the scheduling, at the subsequent instant TO126' there is a possibility (transmissions occasion) for transmitting the data packet 126': the transmission 126t' is therefore performed by the communication controller 114 and the antenna 110 starting from instant TO126'. A delay 126' is therefore caused.

During the transmission of the data packet 126', at instant t122" the buffer 102 receives a second instantiation 122" of the first data packet (packet 2/service 1). According to the scheduling, at the subsequent instant TO122" there is a possibility (transmissions occasion) for transmitting the data packet 122": the transmission 122t" is therefore performed by the communication controller 114 and the antenna 110 starting from instant TO122". A delay D122" is therefore caused.

It is noted that, according to version of known protocols, there is a possibility for transmitting a plurality of redundancy versions (RVs) of each data packet. RVs, which may be either self-decodable or non-self-decodable, and are where indicated with RV0, RV1, RV2, RV3 (it is here imagined that RV0 and RV3 are self-decodable, while RV1 and RV2 are not, while other configurations are possible). The RVs may be associated to different forward error correction (FEC) schemes and/or may be encoded differently (e.g., to increase diversity). Therefore, the transmission of data packets 122, 126 may be understood as transmissions of RVs (e.g., repetitions of multiple RVs). Here, four RVs are used, even if different numbers of repetitions may be possible. Here, the imagined sequence for the RVs is RV0, RV2, RV3, RV1 (other sequences may be possible). Therefore, the transmission 122t, 126t of the packets may be understood as the transmission of multiple data RVs (within the slot time P and which take the time K).

The RVs may be understood as data structures which are associated by the communication controller 114 and are transmitted in subsequent slots within the timing slot in which each transmission 122t, 126t is to be performed. In some examples, there is provided an initial transmission and one or more RVs. In some examples, the transmission of one single RV of the packet is sufficient. In some examples, the transmission of multiple RVs is preferable, for the sake of redundancy.

Hence, the transmission of the packets 122', 126', 122" (in any possible RV), etc. could, in principle, only be performed at some particular timing occasions TO126', TO126', TO122", which are in general too few for permitting a reliable transmission of the packets. If a packet arrives too late (e.g., after the transmit occasion), its transmission needs to be delayed. Further, multiple services at the external device 119 may compete for the transmission at a particular time slot (it is notwithstanding not necessary to have multiple services, in some examples).

Since Rel-15, the reliability and latency have been taken into account for satisfying the defined requirement between 10E-4 in 10ms to 10E-5 in 1ms. This latency-reliability constraint to be used to satisfy ultra-reliable and low latency (URLLC) applications which can be used for different applications such as:

Remote sensors and automation

Industrial communication

Vehicles-to-Vehicles communication

Grant-free (GF)/Configured-Grants (CG) in UL transmission and semi-presentence scheduling (SPS) in UL have been considered a major feature suitable for URLLC application. As the UE uses configured resources for physical uplink shared channel (PUSCH) and physical uplink control channel (PUCCH) transmission, the Transmission Opportunities (TO) cannot be allocated arbitrary depending on data arrival time. This will also have drawbacks when different services (i.e., with different traffic requirements) exist at the UE, where the UE need to have:

Flexible TO

Flexible to select the competing service to transmit first.

Hence, a strict occurrence of TOs of a single active configuration may result in a delay (also referred to as a jitter). It has been understood, however, that this delay can be further reduced if the allowed transmission opportunities are increased. It can be even enhanced if the transmission opportunity can be dynamically set by the UE (per request) or by the gNB (per signaling). Figure 2 highlights the delay due to single-strict CG. (Fig. 2 shows a possible delay due to late packet arrivals, with no cross boundaries or soft starts)

P is the SPS/CG period, K is the number and the window size of repetition, e.g., K=4 in Figure 2, and the Delay (or Jitter) may be computed from when the data of the said service arrives until when the first part of the data run over the air. One can observe the following use cases that may exhibit 'racing up' of services at the UE, requiring access to configured grants.

**Different services (e.g., URLLC services):**

A UE is handling different services with different URLLC requirements, i.e., latency, reliability, and traffic types. In this case, the different services may require different time accessing the air-interface. With different reliability requirements, it may mandate different number of K-repetitions.

**I. Same service (e.g., URLLC service) with varying traffic parameters**

In a factory automation scenario (e.g., physical or distributed system), if the data arriving time is subject to a varying jitter, e.g., due to different time alignment of the different clocks resulting in a hyper-period phenomenon, then, a jittered data may arrive slightly after the TO and may lead to a delay until the next TO. Hence, in case of multiple configured active grant, the newly arriving data will be deferred to the next possible TO in another active configuration.

**Identified problems:**

Applications on UE side (e.g. camera pictures which are taken for industrial quality assurance along a fast-moving production line) are not necessarily all synchronized to the timing of industrial wireless networks (at the side of the external device 119).

If the UE 100 sends data 122t, 126t on the UL with Semi-Persistent-Scheduling (SPS) with an application specific period of the scheduled resources (which are synchronous to the network), it may result in a systematic jitter of the data reception timing, because the relative timing of the application drifts relative to the scheduled SPS resources. The jitter is up to the granularity of the SPS periodicity, which can be up to several TTI's or sTTI's.

This jitter (e.g., D126', D122") may lead to problems in the overall industrial application, e.g. camera pictures for quality monitoring are jittering too much and cannot be used any more for quality assurance.

**Definition of hyper-clock/period**

As shown in Fig. 2.1.1, a hyper-period may be understood as the least common multiple (LCM) of all related clock periods, e.g., various application timers (CPU based), UE's clock 108, network clock error, and the machines internal clocks (embedded clocks). After that time, the complete schedule repeats itself. (Figure 2.1.1 may be understood as showing the Hyper-period due to SPS and periodic arrival mismatch; Figure 2.1.1 may be understood as showing the Hyper-period for arbitrary (fractional) clock mismatch).

*The example showing this on the whiteboard was this:*
sps period = 1
event period = 1.3

| Event: | 0 | 1.3 | 2.6 | 3.9 | 5.2 | 6.5 | 7.8 | 9.1 | 10.4 | 11.7 | 13.0 |
|--------|---|-----|-----|-----|-----|-----|-----|-----|------|------|------|
| LTE:   | 0 | 2   | 3   | 4   | 6   | 7   | 8   | 10  | 11   | 12   | 13   |
| Jitter:| 0 | 0.7 | 0.4 | 0.1 | 0.8 | 0.5 | 0.2 | 0.9 | 0.6  | 0.3  | 0    |

In this case, the hyperperiod is 13.

*Other examples with bigger SPS periods:*
sps_period = 10

event period = 10.3

| Event: | 0 | 10.3 | 20.6 | 30.9 | 41.2 | 51.5 | ... |
|--------|---|------|------|------|------|------|-----|
| LTE: | 0 | 20 | 30 | 40 | 50 | 60 | ... |
| Jitter: | 0 | 9.7 | 9.4 | 9.1 | 8.8 | 8.5 | ... |

sps period = 5
event_period = 10.5 % arrival of physical message

| Event: | 0 | 10.5 | 21.0 | 31.5 | ... |
|--------|---|------|------|------|-----|
| LTE: | 0 | 15 | 25 | 35 | ... |
| Jitter: | 0 | 4.5 | 4 | 3.5 | ... |

*And here an example with two SPS active configurations.*
sps period = 5 (offset = 0 (SPS_ticks = 0, 5, 10, ...), offset = 1 (SPS_ticks = 1, 6, 11, ...))
event period = 10.5

| Event: | 0 | 10.5 | 21.0 | 31.5 |
|--------|---|------|------|------|
| LTE: | 0 | 11 | 21 | 35 |
| Jitter: | 0 | 0.5 | 0 | 3.5 |

As can be understood, the minimum jitter is increasing (and this is undesired).

## Solutions proposed

From the examples above, we can see that the SPS/CG period and the number of SPS/CG active configurations are the only parameters bounding the jitter. The formulas to compute the maximum jitter and the required number of SPS active configurations to reduce or have no jitter is as follows:

1. The maximum allowed jitter must be between the sTTI duration and the SPS period: sTTI_duration <= maximum_allowed_jitter <= SPS/CG_period
2. The minimum number of SPS/CG active configuration required to achieve that maximum allowed jitter is: Number_SPS/CG_config = ceil(SPS/CG_period / maximum_allowed_jitter)

The maximum admitted jitter (maximum_allowedjitter) cannot be larger than the duration of a time slot (otherwise, a packet arriving at the buffer 102 soon after the transmission occasion would automatically be invalid). The maximum admitted jitter (maximum_allowedjitter) shall notwithstanding be lower than a scheduling period P (SPS/CG_period).

It has been understood that it is possible to make use of different active configurations (e.g., SPS configurations, CG configurations). Each active configuration may be understood as a data structure indicating some granted resources (e.g., time slot, frequency, etc.), e.g., for redundancy versions of the transmissions of the data packets. Accordingly, in some examples, in case of late arrival of the data packets 122, 126 at the buffer 102, they may be routed to different active configurations, for example.

According to formula 1, the maximum allowed delay or jitter may be defined between the length of a time slot and the length of the time period.

According to formula 2, the number of active configurations may be associated to the length of the period and the maximum allowed delay or jitter. For example, the number of active configurations is associated to the fraction, or the ceiling of the fraction, between the length of the period and the maximum allowed jitter.

Therefore, on the basis of formulas 1 and 2 (and/or on the basis of the maximum jitter, which may be based on requirements on the physical system), it is possible to define how many active configurations may be defined necessary.

In examples, the active configurations are such that, for each time slot, only one active configuration transmits a data packet including the transmit block of all the redundancy versions of the data packet.

Different active configurations may have an offset with each other, with respect to each other of one symbol or a discrete number of symbols (e.g., one slot may take a discrete number of symbols such as 14 symbols). A time slot comprises an integer number of time symbols. E.g., in LTE and New Radio a symbol duration is the duration of one OFDM symbol. Additionally, a slot may be, for example in normal cyclic prefix length, composed of 14 symbols. In some examples, the offset between different active configurations may be one time slot or an integer number of time slots.

**Embodiments**

Hereinbelow, reference is made to several "embodiments" (e.g., E1, E2, E2*, E3). It is to understand that the "embodiments" are only for the sake of explanation and are to be construed broadly, without limiting the solutions to them. The features of the different embodiments may be combined with the features of other embodiments.

**Embodiment E1**

This solution is based, inter alia, on modifying on the fly some features associated to the scheduling. This may be obtained, for example, by relying on the jitter information 147 provided to the scheduling/reallocation unit 114. For example, the UE may jump (e.g. when the UE determines that the jitter or delay of a packet arrival is too high) from a first active configuration to a second active configuration, the second configuration permitting the transmission of the late-arrived data packet. The active configurations may be more than one, and the UE may switch (e.g., without necessity of requesting to the BS) to the active configuration which permits the transmission of the late-arrived packet.

An idea is to apply a switching mechanism to **alternate between multiple configured and multiple active SPS/CG active configurations and/or preconfigured resources** defined by either the network via RRC messages or the base-station (L1-Signaling/DCI), i.e., allowing multiple reservations. For example, at least one of the following assertions may result to be valid:

    i. Based on RRC messages or gNB L1/DCI active configurations, there should be a set of SPS/CG/pre-configured resources reserved for the UE 100 as defined above.
    ii. The UE 100 may switch to the active configuration (e.g., from plurality of active configurations) that has the nearest transmission occasion, i.e., matching its received (to be transmitted) information.
    iii. Hence, the UE 100 may result to be able to select any suitable active configurations and skip the current used one (if required).
    iv. After a timer T (between 0 and Tmax), the BS (e.g., gNB) may withdraw the skipped active configuration and reuse it with another network resources if needed. The value Tmax can be configured as a design parameter.
    v. The BS (e.g., gNB) may inform the UE back of deactivated SPS/CG via L1 signaling/DCI (L1/DCI-deactivation) or via RRC reconfiguration update

With reference to the active configurations, this concept may be understood as referring the concept of "configuration configured for the UE" and/or "configuration ready to be used after being activated by the BS (gNB) or RRC". Hence, the active configuration may be configured by the UE and/or by the BS.

The present solution may work both for UL and DL. Hereinafter, reference is prevalently made to UL solutions.

With examples according to the present solution, there is provided the possibility of changing the transmission configuration (e.g., the scheduling, timing parameters associated to the scheduling timing period, the particular instantiation of the data packet as transmitted, etc.) on the basis of jitter information (e.g., 146 and/or 147).

It is also possible to reduce the possible jitter time that might be induced due to the existence of periodic events, where their periods are not integer multiples. The least common multiple of all these periods is called "hyper-period". This hyper-period may exist due to the presence of multiple (different) clocks in a controlled system, e.g., the radio chipset clock, the motor clock, the electronic controller clock etc.

The proposed solutions as described in the Embodiments above reduce the transmission timing jitter from the SPS scheduling period (which might be a multiple of a TTI/sTTI) down to the granularity of the wireless communication system TTI/sTTI.

Points in the specifications of LTE and NR, where extensions or changes are required, are explained later in the document.

Reference may be made to Fig. 2.3.1, showing a timing diagram with configurations at the abscissa and time and the ordinate. According to the scheduling there is provided a first active configuration conf1 and a second active configuration conf2. The first and second active configurations conf1, conf2 are scheduled to transmit different RVs of the same data packet 122.

At an instant t122', a data packet 122' arrives at the buffer 102. As foreseen by the scheduling and in particular by the first active configuration conf1, a timing occasion occurs at instant TO122'0, in which a redundancy version RV0 of the data packet 122' is transmitted by the communication controller 114 and the antenna 110. As foreseen by the scheduling and in particular by the second active configuration conf2, a subsequent timing occasion occurs at instant TO122'3, in which a redundancy version RV3 of the data packet 122' is transmitted by the communication controller 114 and the antenna 110.

A subsequent data packet 2 (122") undesirably happens to arrive at the buffer 102 at instant t122", which is after the transmission occasion TO122"0 (this is how to say that the data packet 2 arrives in the buffer 102 after a first delay or jitter threshold, which, when expires, permits to conclude that the data packet 2 has not arrived in time). This means that an unwanted "hole" is caused in the transmission (as the first redundancy version RV0 of the packet 122", which should be transmitted, cannot transmitted because of the absence of the packet 122" in the buffer 102). Theoretically, also the subsequent transmission occasion TO122"3 (which, according to the scheduling, should be assigned to a second redundancy version RV3 of the packet 122") should not be used.

However, it has been understood that it is possible to reconfigure the transmission configuration, e.g., by reallocating, on the fly, the first redundancy version RV0 of the packet 122" to the second active configuration conf2, so as to quickly transmit the first redundancy version RV0 of the packet 122" at the next transmission occasion TO122"3 which was originally assigned to the second active configuration conf2, and in particular to the second redundancy version RV3 of the packet 122". Basically, the resource (time slot, frequency) starting at instant TO123"3, which according to the scheduling was allocated to the second redundancy version RV3, has been reallocated on the fly to the first redundancy version RV0. (This may be carried out when the packet 2 arrives in the buffer 102 after a first delay or jitter threshold, but before a second delay or jitter threshold, which permits to conclude that the packet 2 has arrive in time for the second configuration. The second jitter threshold may be associated, e.g., be equal or almost equal, to the shifting of the second configuration with respect to the first configuration. Therefore, if a second configuration is delayed of a certain time with respect to the first configuration, it is possible to switch to the second configuration when the packet 2 arrives within the second threshold, i.e. in time for being transmitted at the second configuration, e.g. within a delay which is less than the shift between the first and second configurations).

Notably, this possibility may be obtained by relying on the jitter information 146 as provided by the jitter determiner 106 to the scheduling/reallocation unit 112. The scheduling/reallocation unit 112 may reallocate, on the fly, the scheduled resources (e.g., a time slot, a frequency, etc.) and provide the modified scheduling 142 to the communication controller 114, so that the communication controller 114 transmits the data packets in accordance to the modified scheduling.

Subsequently, if the third packet 122"' arrives in time before the next scheduled time slot, the communication may be performed according to the predefined scheduling, without the necessity of reallocating resources. In that case, no resource reallocation is performed on the basis of the jitter information 147.

In examples, the scheduling/reallocation unit may check whether the jitter 147 (as measured by the jitter determiner 106) is larger than a predetermined jitter threshold (as based on the transmission occasions as defined by the predefined scheduling): if the jitter 147 is larger than the predetermined jitter threshold, then a reallocation is performed; otherwise, no reallocation is performed.

At least one of the following statements may be valid:

**For figure** 2.3.1: apply a switching on mechanism to alternate between SPS active configurations allowing different repetition sequences (Figure 2.3.1 may be understood as showing multiple active configuration with variable RV-ID shift).

Repetition can alternate different redundancy versions between different drifted SPS active configurations

Either transmit RV0 (repetition code) only or different RVs with a known pattern to be standardized. (Note: RV0 and RV3 are self-decodable; however, RV2, RV1, need to be sent in sequence with RV3 or RV0).

Network can initiate SPS active configurations to consider the maximum Jitter as a gap

Figure 2.3.2.a) shows a timing diagram with time at the abscissa and resource configurations at the ordinate. A first active configuration conf1 is assigned, by the scheduling, with a slot S122 (instantiated by multiple slots S122', S122", S122"') for the transmission of a first redundancy version RV0 and a second redundancy version RV3 of a cyclical data packet 122 (instantiated by packets 122', 122", 122"', periodically arriving at the buffer 102).

At first, reference is made to timing period 120. At an instant t122', a first packet 122' (packet 1) arrives at the buffer 102. The instant t122' is *before* the timing occasion TO122'0 (start of the slot 122'), and the packet 1 may be transmitted by the communication controller 114 and the antenna 110 as packet 122t'. According to the scheduling, the transmitted first packet 122t' is transmitted using the first active configuration conf1. According to the first active configuration conf1, a first redundancy version RV0 of the received packet 122' is transmitted at a first part of the slot 122', starting from time instant TO122'0. According to the first active configuration conf1, a second redundancy version RV0 of the received packet 122' is transmitted at a second part of the slot 122', starting from time instant TO122'3. As both the first and the second RVs are transmitted in time through the first active configuration conf1, there is here no need for invoking the second active configuration conf2.

For the subsequent timing period 121, the data packet 2 (122") arrives (undesirably) at the buffer 102 at the unwanted time instant t122", which is after the first timing occasion TO122"0 defined by the scheduling (this is hot to say that the packet 122" arrives at the buffer 102 when the scheduled slot S122" has already started). Hence, an unwanted transmission hole may be generated, in the sense that the communication controller 114 and the antenna 110 do not transmit a valuable data.

One could imply that, following the scheduling and the first active configuration conf1, the transmission 122t" of the data packet would be delayed at least to the further subsequent timing period 124.

Notwithstanding, it has been understood that it is possible to make use of the second active configuration conf2, and replenish at least a part of the slot S122" with a valuable packet to be transmitted. Hence, while a first slot S122"0 of the slot S122" hosts a transmission hole, the second slot S122"3 of the slot S122" may actually be used for transmitting, as transmitted data packet 122t", at least one redundancy version (e.g., RV0) of the arrive data packet 122".

Notably, we do not need to modify the first active configuration conf1, but we may simply reconfigure the second active configuration conf2.

Figure 2.3.2.b) shows a variant according to which, instead of transmitting the first redundancy version RV0 of the data packet 122t", the second active configuration conf2 transmits the second redundancy version RV3.

Notably, this possibility may be obtained by relying on the jitter information 1467 as provided by the jitter determiner 106 to the scheduling/reallocation unit 112. The scheduling/reallocation unit 112 may reallocate, on the fly, the scheduled resources (e.g., a time slot, a frequency, etc.) and provide the modified scheduling 142 to the communication controller 114, so that the communication controller 114 transmits the data packets in accordance to the modified scheduling.

Subsequently, if the third packet 122"' arrives in time before the next scheduled time slot, the communication may be performed according to the predefined scheduling, without reallocating resources. In that case, no resource reallocation is performed on the basis of the jitter information 147.

In examples, the scheduling/reallocation unit 112 may check whether the jitter 147 (as measured by the jitter determiner 106) is larger than a predetermined jitter threshold (as based on the transmission occasions as defined by the predefined scheduling): if the jitter 147 is larger than the predetermined jitter threshold, then a reallocation is performed; otherwise, no reallocation is performed.

At least one of the following statements may be valid in some examples:

- Multiple active configurations (e.g., conf1, conf2) may share the same resources (e.g., time slots, frequency); however, each active configuration has a different time-offset, let us say, e.g., similar to the figure, the time offset is a complete slot/mini-slots/subframes/ an OFDM symbols or multiple OFDM symbols. (For example, in Fig. 2.3.2 the time-offset of the second active configuration conf2 with respect to the first active configuration conf2 is the length of the slot S122"0, which is also the distance between the timing occasions T122"0 and TO122"3.)
- If the UE 100 uses one first active configuration (e.g., conf1), the UE 100 may remain to use the same first active configuration (e.g., conf1) over the allocated frequency, e.g., F0.
- If the UE 100 jumps to a new active configuration (e.g., conf2), the UE 100 may only use time resources of the said first active configuration, i.e., as active configurations share the same frequency resources.
- If a packet 122" arrives later than the starting transmit occasion TO122"0 of a first active configuration (e.g., conf2), the UE 100 may postpone the transmission 122t" of the first packet to the first transmit occasion TO122"3 of a second, next active configuration (e.g., conf2). The time laps until the service is maintained is a delay or a jitter.
- The UE 100 may start from the first RV (e.g., RV0, as in Fig. 2.3.2a)) or another RV (e.g., RV3, as in Fig. 2.3.2b))

Figure 2.3.1 may therefore be understood as showing multiple active configuration with variable RV-ID shift.

Another example is provided by Fig. 2.4.1, where the ordinate is the time, and the abscissa is the frequency. Here, a first active configuration conf1 and a second active configuration conf2 are both used (e.g., at the same frequency), even conf1 and conf2 do not overlap (they use time slots which are not the same). According to the scheduling, for each arriving data packet 122, the first active configuration conf1 provides the transmission of a first redundancy version RV0 at a first time slot, and the second active configuration conf2 provides the transmission of a second redundancy version RV3 at a second time slot (non-overlapping with the first time slot).

For period 120, a packet 122' correctly arrives at the buffer 102 at an instant t122', which is *before* the timing occasion TO122'0. Hence, the packet 122' is transmitted as packet 122t" by the communication controller 114 and the antenna 110 at the time slots defined by the first and second active configurations conf1, conf2, according to the scheduling.

For period 121, a small jitter impairs the arrival of a packet 122", as the packet 122" incorrectly arrives at the buffer 102 after the scheduled timing occasion TO122"0. Accordingly, the slot S122"0, which, according to the scheduling and the first active configuration conf1 should host a redundancy version of a packet 122t" to be transmitted, actually contains an undesired transmission hole.

One could imagine that the same fate would impair the subsequent slot S122"3 (foreseen by the second active configuration conf2 for hosting the second redundancy version RV3 of a packet 122t" to be transmitted).

However, it has been understood that it is possible to avoid the occurrence of a further transmission hole, and use the slot S122"3 for hosting a valuable data and to reduce the jitter. In fact, it has been understood that it is simply possible to modify the second active configuration conf2 on the fly, to host at least one redundancy version (e.g., RV3) of the data packet 123" (transmitted as the transmission 122t").

Accordingly, at least one redundancy version of the data packet may be transmitted in time. This is possible at least when the delayed arrival of the data packet 122" is at a delayed time instant t122", which is *after the* transmit occasion TO126"0 of the first active configuration conf1, but *before* the transmit occasion TO126"3 of the second active configuration conf2.

At the subsequent period 124, an increased jitter impairs the arrival of the packet 122''', which is received in the buffer at the time instant t122''', which is *after* the timing occasion TO122"0 which, according to the scheduling and the first active configuration conf1, is foreseen as the start of the slot S122''' for the transmission of a first redundancy version RV0 of the packet 122'''.

It has been understood that, instead of suffering of another transmission hole, it is possible to transmit a second version RV3 of the previous data packet 122": accordingly, the slot S122''' is not wasted, and a second redundancy version RV3 of the previously transmitted data packet 122" may be transmitted. Notably, this possibility may be obtained by relying on the jitter information 146 as provided by the jitter determiner 106 to the scheduling/reallocation unit 112. The scheduling/reallocation unit 112 may reallocate, on the fly, the scheduled resources (e.g., a time slot, a frequency, etc.) and provide the modified scheduling 142 to the communication controller 114, so that the communication controller 114 and the antenna transmit the data packets in accordance to the modified scheduling.

In examples, the scheduling/reallocation unit 112 may check whether the jitter 147 (as measured by the jitter determiner 106) is larger than a predetermined jitter threshold (as based on the transmission occasions as defined by the predefined scheduling): if the jitter 147 is larger than the predetermined jitter threshold, then a reallocation is performed; otherwise, no reallocation is performed.

At least one of the following statements may be valid in some examples:

**For figure 2.4.1:** apply a switching on mechanism to alternate between SPS active configurations (e.g., conf1, conf2) allowing different repetition sequences.

Here we show that with two SPS active configurations, we can minimize the jitter to certain extend

If SPS is skipped, the redundancy versions RV0, RV3 can start with the most outdated packet as they are both self-decodable

Once a packet is skipped in the earlier SPS, the retransmission packet identifier (ID) can be kept as is; however, toggled to include the most outdated packet

If we need to reduce the jitter further, more SPS-configs may be used

Figure 2.4.1 may be understood as showing multiple active configuration with variable RV-ID shift

It is to be noted that Fig. 2.4.1 shows an example in which the frequencies of the first and second active configurations conf1, conf2 are different (e.g., non-overlapping).

Same operation as Figure 2.4.1, Figure 2.4.2 shows the case when two active configurations share the same frequency resources but have different frequency offset.

In case the buffer 102 receives, at the delayed instant t122"", the packet 4 (122"") (for which the first active configuration conf1 would prescribe the transmission at the slot S122""0) is transmitted at the slot S122""''0, while the subsequent slot S122""''3 may be used for transmitting the packet In the examples above, reference has prevalently been made to a data packet 122 periodically received by the buffer 102. However, multiple data packet (e.g., 122, 126) may arrive, e.g. from different services (e.g., associated to different measurements or different applications or different uses) expected by the external device 119 from the UE 100.

An example is provided by Fig. 2.4.3, in which different services 1 and 2 are served at different periods.

Different frequency bands are used: a first active configuration conf1 is associated to a first band F0, and the second active configuration conf2 is associated to a second band F0+F1. In this case, the first and second band may be at least partially overlap. The second band F0+F1 may be broader than the first band F0.

In examples, the first (narrower) band F0 may be used for transmitting data packets 122 for servicing the service 1. The second (broader) band F0+F1 may be used for transmitting data packets 126 for servicing the service 2. It is here hypothesized that the service 2 needs more band (e.g., more information to be transmitted in the one slot, even though the transmission rate may be lower).

A first data packet 122' arrives (from service 1) at the instant t122' before the transmit occasion TO122'0, while no second data packet for service 2 arrives. Hence, the first data packet 122' is transmitted by the communication controller 114 and the antenna 110 as transmission 122' in the slots S122'0 and S122'3,

At the subsequent instant t122", another first data packet 122" arrives at the buffer 102 before the timing occasion TO122"0. Therefore, at least one redundancy version RV0 of the second data packet may be transmitted as transmission 122t" in at least one first slot S122"0.

However, at instant t126', before the subsequent timing occasion TO122"3 (which is scheduled for either transmitting a second redundancy version RV3 of the second data packet 122t" or transmitting a packet 126t servicing service 2), a data packet 126' for service 1 arrives at the buffer 102.

One could imagine that, at this point, a second version RV3 of the first packet 122t" should necessarily be transmitted, while the transmission of the data packet 126t' for service 1 should be delayed to the subsequent timing occasion.

However, it has been understood that this implication can be avoided by intelligently operating on the active configurations conf1 and conf2. For example, it may be possible to avoid the transmission, in the slot S122"3, of the second redundancy version RV3 of the data packet 122t", while it may be possible to transmit, instead, a redundancy version RV0 of the data packet 126' associated to service 1.

At instant t122''' a packet 122''' (for service 1) is received by the buffer 102, and at instant t126" a packet 126" (for service 2) is received by the buffer 102. Both instants t122''' and t126" are *after* the timing occasion TO122'''0 for transmitting at a first slot S122'''0, but *before* the timing occasion TO 122'''3 for transmitting at a second (immediately subsequent) slot S122"3.

Hence, the slot S122'''0 undesirably hosts a transmission hole.

However, a transmission hole in the subsequent slot S122'''3 is avoided: this is because it is possible to modify on the fly the second active configuration conf2, and insert a redundancy version RV3 of the packet 122t". As the packet 122t''' is services service 1 (which requires less band than service 2), only a part of the band S122'''3-1 in the slot S122'''3 may be used, while the remaining band S122'''3-0 the slot S122'''3 may be void or filled by zero values.

Basically, a prioritization may be defined: some packets may be defined as having higher priority than other ones. The priority may be fixed (e.g., defined a priori) or variable, as in Fig. 2.4.3: while the competition for the slot S122"3 has been won by service 2, the competition for the slot 122'''3 has been won by service 1. The priority may be therefore variable: for example, the priority may be changed alternatively for different services. In alternative, other strategies may be adopted: for example, a first-in-first-out, FIFO, or last-in-first-out, LIFO strategy may be adopted. In examples, the prioritization may follow the quality of service, QoS, as experienced by the UE 100 and/or by the external device 119.

In examples, there may be the possibility for the UE to choose, among different packets arriving from different services, the preferred data packet to be sent. For example, it is possible for the UE to decide the preferred data packet to be transmitted on the basis of a predetermined required maximum jitter, so as to give precedence to data packets whose required maximum jitter is closest to expire.

Also this example relies on the jitter information 146 as provided by the jitter determiner 106 to the scheduling/reallocation unit 112. The scheduling/reallocation unit 112 may reallocate, on the fly, the scheduled resources (e.g., a time slot, a frequency, etc.) and provide the modified scheduling 142 to the communication controller 114, so that the communication controller 114 and the antenna 110 transmit the data packets in accordance to the modified scheduling.

In examples, the scheduling/reallocation unit 112 may check whether the jitter 147 (as measured by the jitter determiner 106) is larger than a predetermined jitter threshold (as based on the transmission occasions as defined by the predefined scheduling): if the jitter 147 is larger than the predetermined jitter threshold, then a reallocation is performed; otherwise, no reallocation is performed.

The UE 100 may be configured with two or more active configurations share part of the frequency domain so that at least one of the following assumptions may be valid:

The shared frequency resources are, e.g., F0

E.g., a second active configuration may be allocated to an extra frequency resources F1

F0 and F1 may be adjacent

F0 and F1 may be non-adjacent

Resources within F0 or resources within F1 may be adjacent

Resources within F0 or resources within F1 may be non-adjacent

The UE 100 may be configured with two or more active configurations (e.g., conf1, conf2) may have different time offset: e.g., the time offset can be one or multiple slots/mini-slots/subframes/ OFDM symbols or multiple OFDM symbols.

The UE 100 may be configured to use one active configuration (e.g., conf1) for a service (e.g., service 1) and another active configuration (e.g., conf2) for another service (e.g., service 2) for UL transmission

The UE 100 may be configured to prioritize any of the services based on the QoS or the jitter or the cumulative delay.

If the UE 100 may select (e.g., due to a jitter/delay and or QoS prioritization) to transmit one service that requires less resources (say F0 only), the UE 100 may still use the active configuration with more resources (F0 +F1):

Wherein the UE 100 decides to send more data to fill in frequency resources

Wherein the UE 100 decides to send only available data and insert zeros for the more frequency resources, e.g., F1.

Figure 2.4.2 may be understood as showing multiple active configuration with variable RV-ID shift using same frequency and different time. Hint; every CG/SPS starts with RV0.

Fig. 2.4.3 therefore disclose a scheme with multiple active configuration with variable RV-ID shift

**For figure 2.5.1:** Apply a switching on mechanism to alternate between SPS/CG active configurations allowing different repetition sequences. Now, with more SPS/CG-configs, at least one of the following assertions may be valid:

RV0, RV2, RV1, RV3 can be decoded in sequence for better performance. If not RV0 only or RV0 and RV3 (for self decodability) can be transmitted.

RV0, RV2, RV3, RV1 can be decoded in sequence for better performance. If not RV0 only or RV0 and RV3 (for self decodability) can be transmitted.

RV0, RV1, RV2, RV3 can be decoded in sequence for better performance. If not RV0 only or RV0 and RV3 (for self decodability) can be transmitted.

Can be any of the above of all versions. If not RV0 only or RV0 and RV1, or RV0 and RV2 or RV0 and RV1, RV2, etc. ...

Any combination is admitted.

Figure 2.5.2: similar to Figure 2.5.1; however, at least one of the following assertions may be valid:

with all active configuration share frequency resources but have different time resources,

Some of the frequency resources can still be overlapping and some arenon-overlapping as in Figure 2.4.3

In Figure 2.5.1, if all frequency resources are overlapping, then the UE, once it selects an active configuration, it may not jump to another parallel active configuration.

There is a set of SPS/CG active configurations reserved for the UE. The UE can switch to the active configuration that is closer to the received data transmission. Depending on the used SPS active configuration, the set of reserved SPS active configurations can change.

In general terms, when multiple redundancy versions (RVs) compete for the transmission, priority may be awarded to the self-decodable RVs. Other priority strategies may be adopted.

Fig. 2.6 shows an example of a method 260 according to an example, which may be combined with features above. At step 261, data packets 122, 126 are received, e.g., by the buffer 102 from an external device 119. At step 262, a jitter 147 is measured (e.g., by the jitter determiner 106). At step 264, a reallocation is performed (e.g., by modifying the scheduling on the fly), e.g., by the scheduling/reallocation unit 112. At step 266, the transmissions are performed according to the reallocations (e.g., new scheduling), e.g., by the communication controller 114.

As explained, the transmission configuration (i.e., the general transmission configuration between the UE and the BS) is a general concept including all the rules, protocols, etc. which permit the communication. There are included, for example, the frequencies, the scheduling, etc.

There is the possibility of using "first and/or second active configurations (conf1, conf2)", which may be understood as different schemes at disposal of the UE for transmitting its packets. The active configurations may be scheduled, and it is not necessary that each active configuration is always chosen.

When an active configuration is chosen (e.g., because of a late arrival of a data packet 122 or 126 at the buffer 102), in some examples the UE may continue using the chosen active configuration up to the next late arrival of a subsequent data packet.

The "transmission configuration" is therefore a general concept which may also encompass the concept of "(different) active configuration(s)" (e.g., SPS configurations), but is not necessarily the same.

The active configurations may be in a plural number (e.g., more than two), and, in some cases, only one active configuration transmits. When a transmitting active configuration does not permit to transmit a data packet anymore (e.g., because of the data packet having arrived at the buffer 102 too late), the UE may switch to a second active configuration (e.g., offset of one slot or of a discrete number of slots) which permits to transmit the late-arrived data packet as soon as possible.

Summarizing, at least one of the following assertions may be valid:

The user equipment, UE, (100) to:

receive data packets (122, 126);

transmit the data packets (142) according to a scheduling which allocates transmission resources in a determined time period;

determine a delay or jitter information (146) between the reception of a data packet (122, 126) in the buffer (102) and the transmission of the data packet; and

modify the transmission configuration to switch from a first active configuration to a second active configuration.

The active configurations may be such that, for each time slot, only one active configuration transmits a data packet.

The active configurations may be such that, for each time slot, only one active configuration transmits a data packet including an initial transmission and all the possible redundancy versions of the data packet.

The UE may be to choose between the first and second active configurations so as to switch from one configuration to the chosen configuration without transmitting a request to a BS, hence increasing speed.

When operating at the first active configuration and in case of late arrival of a data packet, the UE may switch to the second active configuration for transmitting the late arrived data packet.

When switching to the second active configuration, to reallocate a data packet or a RV of the data packet, to a resource of the second active configuration.

The scheduling may provide for a configuration time offset (e.g., indicated with 242 in Fig. 2.4.2) of the second active configuration with respect to the first active configuration, so that, if a data packet 122" (Fig. 2.4.2) arrives too late for being transmitted in the first active configuration but before the configuration time offset 242 elapses, the UE reallocates the late-arrived data packet 122", or at least a redundancy version thereof, to a resource of the second active configuration, and switches to the second active configuration (and in fact in Fig. 2.4.2 the transmitted packet 122t" is transmitted in one single RV, but is transmitted within only the time offset 242).

The time offset 242 may be one single slot or a multiple of the slots.

In some examples, the time offset 242 between the first and second active configurations may be less or equal than the maximum delay or jitter admitted for the transmission of the transmitted packet 122t".

After switching to the second active configuration, the UE may continue transmitting with the second active configuration up to a new necessity for switching to the first active configuration or to a different active configuration based on a subsequent late arrival of a data packet.

The UE may, when choosing to switch to another active configuration, choose the active configuration (among a plurality of active configurations different from the first active configuration) which permits the transmission of the delayed data packet.

The UE may receive BS's signalling defining the active configurations (e.g., by RRC).

In some examples above, different active configurations have different resources for transmitting different RVs in different time slots. Another coverage may be to have either only time and/or time+frequency shift between the configurations. Different active configurations have different resources for transmitting different redundancy versions, RVs, in different frequencies.

**Embodiment E2**

This solution is based, inter alia, on measuring or obtaining the jitter in the arrival of the data packets 122, 126, and, in case of necessity, in the request of modifying the timing of the scheduling. For example, the UE 100 (which may be as in Fig. 1) may request to increase or reduce the length of the scheduling period. In addition or alternative, the UE 100 may request to modify the offset of the scheduling period (e.g. by shifting the scheduling period). In some cases, this solution may be understood a distributed PLL, in which the BS synchronizes with the clock of the external device 119.

Hence, in order to modify transmission configuration, the UE 100 is configured to transmit the delay or jitter information (146) and/or a scheduling and/or configuration modification request, so as to modify the transmission configuration and/or the scheduling. In examples, the UE may be configured to request to the BS some adjustments and/or some modifications. For example, the UE may provide some information which will force the BS to modify the timing parameters of the scheduling, hence operating as a distributed PLL, in which the timing of the scheduling is synchronized by the BS to the clocks of the external device 119.

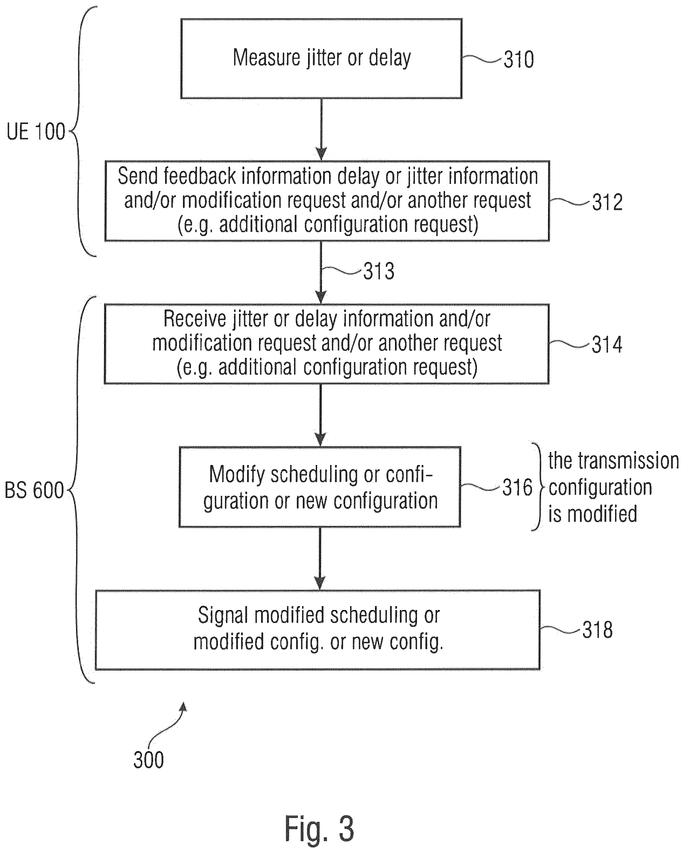

Fig. 3 shows an example of a method 300 in which a UE (e.g., the UE 100 above) measures jitter information 146 at step 310. The jitter information 147 may refer to the jitter between:

the arrival of a data packet 122, 126 at the buffer 102 from the external device 119; and

the first transmit occasion (e.g., the time first slot which, according to the scheduling, permits the transmission of the data packet)

In addition or alternative, the UE 100 may define a scheduling modification request and/or configuration modification request, to request a modification of the scheduling to the BS (e.g., based on the jitter measurement 146).

At step 312, the UE 100 may send the jitter information and/or the modification request and/or the configuration modification request to the BS. An updated of the scheduling may therefore be requested by the UE.

At step 314, the BS may receive the jitter information and/or the modification request and/or the configuration modification request. This information is collectively referred to as information 313.

At step 316, the BS may modify the scheduling according to the jitter information and/or the modification request and/or the configuration modification request (information 313). Hence, an update is carried out.

At step 318, the BS may signal the modified scheduling (or scheduling parameters, such as the timing parameters of the time period 120) to the UE.

In general terms, the information 313 sent by the UE 100 to the BS may include a determination on parameters associated to the jitter. These parameters (which may include, for example, parameters k1 and/or k2 as discussed below) may cause a reconfiguration of the scheduling (and in particular of the scheduling parameters of the communication).

For example, the UE 100, when periodically receiving at the buffer 102 the data packet 122, 126 from the external device, may determine that the period of provision of the data packets is different from the UE's expected period (this may be due to the non-synchronization of the timing module of the external device 119 with respect to the timing module 108 of the UE 100). Therefore, the UE (e.g., at the jitter determiner 106) may determine a scaling parameter k1 which would permit to resynchronize the scheduling period to the provision period of the arriving the data packet 122, 126 at the buffer 102.

Similarly, the UE 100 (e.g., at the jitter determiner 106) may determine a shifting parameter k2 for shifting the scheduling period, so as to align the scheduling period with the period of provision of the data packet 122, 126 as provided by the external device 119 to the buffer 102.

Accordingly, the BS ay update the parameters of the scheduling on the basis of the delay or jitter information.

It is to be noted that, in some examples, the parameters k1 and k2 are calculated by the BS on the basis of the feedback information 313 (e.g., delay or jitter information) provided by the UE 100. In that case, k1 and/or k2 may be modified at step 316.

In some examples, the delay or jitter information may include a jitter trend information. The jitter trend information may include information on the evolution of the jitter during subsequent scheduling periods. The jitter trend information may provide information on the increasing or decreasing jitter, for example. For example, there may be provided the ratio $Ratio\_1 = (\Delta T_1 - \Delta T_2)/period$, where $\Delta T_1$ is a first difference between the arrival of a first data packet (e.g., 122") in the buffer (e.g., 102) and the subsequent timing occasion (e.g., TO122"0); $\Delta T_2$ is a second difference between the arrival of a second, subsequent data packet (e.g., 122''') in the buffer (e.g., 102) and the subsequent timing occasion (e.g., TO122'''0) for transmitting the second data packet (e.g., 122"'); and "period" is the length of the current determined period (e.g., 122), to provide a value of the jitter trend. The jitter trend may be updated at each period. The jitter trend may be signalled to the Bs with the information 313. An example of trend information may be (with reference to Fig. 2.3.2):

Ratio_value_1 may be associated to the jitter trend in period 120;

Ratio_value_2 may be associated to the jitter trend in period 121;

Ratio_value_3 may be associated to the jitter trend in period 124.

By analyzing the trend on the jitters, it is possible to provide jitter trend information to the BS.

In examples, a lookup table, LUT, 113 may be provided, for providing a quantized version of the delay or jitter information. The LUT 113 may have a plurality of values which may be associated to different ratio values obtained in different time periods. Therefore, the values of the jitters may be encoded by using codes stored in the LUT 113: hence, the code associated to a particular jitter may be provided to the BS as delay or jitter information. In other examples, the trend delay information or trend jitter information may be directly analyzed at the jitter determiner 106, which may therefore provide jitter trend information after having directly analysed the evolution of the jitter.

On the basis of the jitter trend information it may be possible (e.g., by the BS and/or by the jitter determiner 106 and/or the scheduling/reallocation unit 112) to foresee the future jitter, and, in case, to adopt a strategy to compensate it.

On the basis of the jitter trend information (e.g., in information 113) as provided by the UE 100, the BS may modify the length of the scheduling period and/or shift the scheduling period. The BS may, for example, calculate k1 and k2.

Examples are provided hereinbelow.

I. The UE 100 may become an assisted **dynamically updated SPS period and/or SPS transmission index (of the existing SPS configuration)** to minimize the experienced jitter on application side by at least one of: update the SPS_period by adding/subtracting $\pm k1$ * Slots, where $k$ may be a value based on the computed jitter; i.e.,

$$new\_SPS\_period = current\ SPS\_period \pm k1\ *Slots \qquad (1)$$

(k1 may be configured based on the UE event observation and measurements, e.g. as reported with the delay or jitter information 147. k1 can also be quantified in a lookup table)

II. Shift the SPS_index by adding/subtracting $\pm k2$ * Slots. Where k2 may be an arbitrary value based on the computed jitter, such that:

$$new\_SPS\_Index = current\ SPS\_Index \pm k2\ *Slots \qquad (2)$$

(k2 may be configured based on the UE event observation and measurements, e.g. as reported with the delay or jitter information 147. k2 may also be quantified in a lookup table, e.g., LUT 113).

III.The updating of the SPS/CG period/index is initiated (e.g., at step 312) by messages (e.g., 313) from UE 100 to the BS (network side) due to observed timing of application data and timing of the communication system (UE, network)

IV. The updated SPS (index, period, starting time) may be signaled from BS (network side) back to UE 100, i.e., as k1 or k2.

V. The updated SPS configuration might be implemented by releasing the current ("SPS#1" - without updates) only after t msec (0 < $t$ < Tmax msec) after defining a new SPS ("SPS#2" - ans in the previous equations (1) & (2)). In this case, the BS (network side) signals to the UE 100 both SPS (re)-configurations (i.e., expiration time t of SPS#1 and configuration of SPS#2) (e.g., at step 318).

Even though reference is here made to SPS, it is possible to also refer to different techniques (the SPS_period may be the scheduling time period). It is here important to understand that the transmission configuration may be modified by the BS, on UE's demand, on the basis of the delay or jitter information 146 obtained by the jitter determiner 106. The features of the embodiment E2 may be combined with those of the embodiment E1.

In some examples, there is the possibility of updating the SPS_period_1 by $\pm k$ * (s)TTIs, where k can be any arbitrary values based on the observed jitter; i.e., see the equation above in E2, equations (1) and (2).

***Note:** The SPS_period_1* = periodicity in NR defined below ***In TS** 36.331/38.331*
periodicity ENUMERATED {sym2, sym7, ms0dot125, ms0dot25, ms0dot5, ms1, ms2, ms5, ms10, ms20, ms32, ms40, ms64, ms80, ms128, ms160, ms320, ms640}

where sym2 is 2 OFDM symbols, sym7 is 7-OFDM symbols, etc.. ms stands for millisecond and ms0dot5 is 0.5 ms where, e.g., ms32 is 32 ms.

In some examples, there is the possibility of performing at least one of:

***Defining the*** value *ΔT to be the time between* arrival of a packet in the buffer and the Next **SPS** period event.

Hence, $\Delta T$ is the observed UE jitter.

The value of $\Delta T$ has then to be quantized and fed back to the gNB either as absolute timing ($\Delta T$) *or as a multiple with respect to to the timing of the network (e.g. sample rate, fraction of (s)TTI/slot/mini-slot)*

*k (which may embody k1 and/or k2) shall be sent to the gNB in the next periodic/aperiodic PUCCH/PUSCH (in data control channel)*

The Buffer Status Report BSR has to be updated to inform the gNB of the presence of Outstanding messages ratio. Ratio need to be computed and quantized from a table:

*The Ratio can be computed as follows:*

$$Ratio\_1 = (\Delta T_1 - \Delta T_2)/SPS\_period$$

*Ratio Table could be as follows*

$$Ratio\_value\_1 = P1$$

$$Ratio\_value\_2 = P2$$

$$Ratio\_value\_3 = P3$$

...
Where P1> P2 > P3 (which may be in the lookup table, LUT 113), where unquantized Ps are between -1 and 1, where zero doesn't required any update. For positive values of unquantized P, the SPS index can be shift forward in time (positive, negative, time) or the SPS_period is expanded (until the P is getting nevative).

Finally, the gNB has to either update the SPS by the new_SPS_Period or by the shift with the new_SPS_Index accoding to Equation (1) and (2).

Hence, in view of the above, it is possible to state that the UE may:

receive data packets (122, 126);

transmit the data packets according to a scheduling which allocates transmission resources in a determined time period, the time period being configurable; and

transmit (313) at least one of:

the delay information (146) or jitter information (146); and

a request (313), the request begin at least one of:

a scheduling modification request,

a configuration modification request,

a feedback information,

so as to modify the transmission configuration and/or the scheduling.

In some examples, there may apply one of the following considerations:

The UE may measure or obtain a delay trend information or jitter trend information, and provide the request (313) based on the delay trend information or jitter trend information;

The UE may measure or obtain a delay trend information or jitter trend information, and provide a feedback (313) on the delay trend or jitter trend information;

The scheduling modification request (313) may include a request of an update of the time length of the determined time period (120);

The request (313) may include the information of a first value k1 which is, or is obtained from, the delay information or jitter information (the first value k1 may indicate a requested increased or decreased time length of the determined time period)

The first value k1 may be understood as a number of slots which, when added to or subtracted from the length of the time period, adjust the time period to the period of arrival of the data packets;

The request (313) may include the information of a second value k2 which is, or is obtained from, the delay information or jitter information; the second value k2 may indicate a requested time index or time offset of the time period;

The second value k2 may be understood as a number of slots which adjust the time offset or time index of the determined time period to the period of arrival of the data packets

Different granularities may be used (e.g., it may be measured in sTTIs, slots, mini-slots, durations of OFDM symbols, etc.). In some examples, k1 and k2 may be used for scaling time durations which may be one of sTTIs, slots, mini-slots, durations of OFDM symbols, etc.

**Embodiment E2*:**

This embodiment may also be illustrated as a variant of E2 and can be also shown in Fig. 3. The UE 100 may be as in Fig. 1.

In this embodiment, the UE 100 may send a feedback (step 312) to the BS (e.g., gNB) with some information 313 (e.g., codified in a control data field) regarding the delay or jitter (delay or jitter information 146) for adapting the CG/SPS accordingly. This may be via uplink (UL) control information (UCI) feedback and/or in Data control feedback and/or UE assisting information (all this information may be resumed with the concept of delay or jitter information). This UE assisting information may include information about the traffic arrival, delays, and data periodicity; this may be sent periodically or on-demand, according to the examples.

In addition or alternative, the BS (e.g., gNB) may sense or predict the jitter or decode the jitter from a UE assisting information. Herewith, the BS (e.g., gNB) may update the existing configuration period (with k1) or update the CG/SPS offset (with k2). Hence, the BS may send an SPS/Configured-Grant update message, e.g., RRC ConfiguredGrantConfigUpdate, with any of the following:

periodicity-Update (e.g., with a quantized value from or derived from k1) timeDomainOffset-Update (e.g., with a quantized value from or derived from k2)

timeDomainAllocation-Update (e.g., with a quantized value from or derived from k1 and/or k2)

resourceAllocation-Update

modulation coding scheme Update (if needed)

Another example: any or all of the following can be sent via an update downlink control information (DCI) message, i.e., via L1-signaling (wherein L1 means physical layer):

periodicity-Update (with a quantized value from or derived from k1),

timeDomainOffset-Update (with a quantized value from or derived from k2)

timeDomainAllocation-Update (with a quantized value from or derived from k1 and/or k2)

resourceAllocation-Update

modulation coding scheme Update (if needed)

The features of the embodiment E2* may be combined with those of the embodiment E1 and/or E2.

In general terms, the UE 100 may be configured to receive, from the base station, BS, signalling regarding the transmission configuration. The signalling may be at least partially based on the at least one of the delay or jitter information (e.g., 146), scheduling modification request, configuration modification request, and feedback information, so as to modify the transmission configuration and/or the scheduling. In addition or alternative, the UE may be configured to receive, from the BS, signalling regarding the transmission configuration, the signalling being at least partially based on measurements performed by the BS or by another device associate to the BS.

Hence, with the present embodiment, the UE may:

receive data packets (122, 126);

transmit the data packets according to a scheduling which allocates transmission resources in a determined time period, the time period being configurable; and

transmit at least a feedback information 313,

so as to modify the transmission configuration and/or the scheduling (e.g., after the BS has decided the modification of the scheduling and/or the transmission configuration and the BS has signalled this decision to the UE).

In some examples, the BS may operate autonomously.

In some examples, at least one of the following may apply:

the UE may receive, from the BS, signalling regarding the transmission configuration, the signalling being at least partially based on the at least one of the delay information (146) or jitter information (146) (146), scheduling modification request, configuration modification request, feedback information, and additional configuration request, so as to modify the transmission configuration and/or the scheduling;

the UE may receive, from the BS, signalling regarding the transmission configuration, the signalling being at least partially based on measurements performed by the BS or by another device associate to the BS.

**Embodiment E3**

In this embodiment, the UE 100 may send to the BS additional information (which may also be understood as delay or jitter information). In some examples, the UE may be as in Fig. 1. The embodiment is also shown in Fig. 3.

In order to minimize the observed jitter on application side, the **UE 100 may request additional new SPS/CG configuration(s)** by sending a jitter-correction report or extend one existing measurement REPORTS (e.g., CSI reports, SPS reports, or new reports). This report or feedback information can be conveyed via UCI message or in UL Data control information. At least one of the following assertions may be valid:

I. The UE may send one request (shall be a separate report or appended to one of the measurement reports as stated above) including at least one of the following:

a. Need for shifting the SPS/CG Period and/or the SPS/CG index (e.g., time index) can be sent using, e.g., 2 bits fields, e.g.,

i. 00 → no change;
ii. 01 → SPS period;
iii. 10 → SPS index;
iv. 11 → SPS period and index.

b. Another field is the change required, i.e., the changing value. The changed value may be quantized, where k1 and k2 may be selected from a table (design in the technical description)
c. Another field to update the network/gNB about the severity of the jitter. This can be quantized into 8 values as follows: 000 is the lowest and 111 is the highest

Even though reference is here made to SPS, it is possible to also refer to different techniques (the SPS_period may be the scheduling time period). It is here important to understand that the transmission configuration may be modified by the BS, on the basis of the UE's feedback report demand, on the basis of the delay or jitter information 146 obtained by the jitter determiner 106.

At least one of the following assertions may be valid, according to the examples:

Let the UE request an additional new SPS configuration or request to handle the jitter introduced by a drifting trigger event in one of the reports.

In this case, the UE has to compute $\Delta T$ (e.g., jitter or delay information) and the quantize ratio P as before

Based on the current SPS_period and computed $\Delta T$, the UE can predict the next possible SPS_period and inform the gNB

The prediction mechanism is up to the UE implementation

The predicted value can be quantized from a table and sent back to the gNB

The following table describes a problem the embodiments solve:

| scenario | |
|---|---|
| Use case 1/Problem 1 | Missmatch between packet arrival and the machine clocks |
| Use case 2/Problem 2 | Delay due to packet congestion (congestion control mechanism) |
| Use case 3/Problem 3 | Factory automation with multiple machines clocks |
| Use case 4/Problem 4 | Synchronized machine access |

Hence, with the present embodiment, the UE may:

receive data packets (122, 126);

transmit the data packets according to a scheduling which allocates transmission resources in a determined time period, the time period being configurable; and

transmit at least a request 313,

so as to modify the transmission configuration and/or the scheduling (e.g., after the BS has decided the modification of the scheduling and/or the transmission configuration and the BS has signalled this decision to the UE).

The request 313 may be a request including at least one of:

an additional configuration request, requesting an additional configuration;

a request of a particular scheduling period from the UE;

a request of a particular shifting from the UE;

a request of a particular updating of the length of the period from the UE.

The additional configuration request (313) may include a request of changed time length of the determined time period. In response, the BS may provide a changed time length of the determined time period. The UE may therefore change time length of the determined time period.

The additional configuration request (313) may include a request of changed time index or time offset of the determined time period. In response, the BS may provide a changed time index or time offset of the determined time period. The UE may therefore change the time index or time offset of the determined time period.

The UE may expect an additional configuration update message in the RRC including the updated time period. When received, the UE may update the time period.

The UE may expect an additional configuration update message in the L1 signalling, e.g., DCI, including the updated time period. When received, the UE may update the time period.

The additional configuration request (313) may include a request of both changed time index or time offset and changed time length of the determine time period. In response, the BS may provide both a changed time length of the determined time period a changed time index or time offset of the determined time period. The UE may therefore change the time length and the time index or time offset of the determined time period.

The UE may expect an additional configuration update message in the RRC including the updated time index or time offset. When received, the UE may update the time index or time offset.

The UE may expect an additional configuration update message in the L1 signalling, e.g., DCI, including the updated time index or time offset. When received, the UE may update the time index or time offset.

The may receive, from the base station, BS, signalling regarding the transmission configuration, the signalling being at least partially based on the at least one of the delay information (146) or jitter information (146) (146), scheduling modification request, configuration modification request, feedback information, and additional configuration request, so as to modify the transmission configuration and/or the scheduling.

The LUT 113 may provide a quantized version of at least some of the delay information or jitter information, so as to provide the quantized version or jitter information.

## ConfiguredGrantConfig as in TS 38.331

An example of active configuration is provided for TS 38.331. The IE *ConfiguredGrantConfig* may be used to configure uplink transmission without dynamic grant according to two possible schemes. The actual uplink grant may either be configured via RRC (type1) or provided via the PDCCH (addressed to CS-RNTI) (type2).

*ConfiguredGrantConfig* information element

```
-- ASN1START

-- TAG-CONFIGUREDGRANTCONFIG-START


ConfiguredGrantConfig ::=              SEQUENCE {
    frequencyHopping                        ENUMERATED {mode1, mode2}
            OPTIONAL,      -- Need S,
    cg-DMRS-Configuration                        DMRS-UplinkConfig,
    mcs-Table                           ENUMERATED {qam256, spare1}
            OPTIONAL,      -- Need S
    mcs-TableTransformPrecoder                ENUMERATED {qam256, spare1}
                OPTIONAL,      -- Need S
    uci-OnPUSCH                             SetupRelease { CG-UCI-OnPUSCH },
    resourceAllocation                      ENUMERATED { resourceAllocationType0,
resourceAllocationType1, dynamicSwitch },
    rbg-Size                              ENUMERATED {config2}
            OPTIONAL,      -- Need S
    powerControlLoopToUse                   ENUMERATED {n0, n1},
    p0-PUSCH-Alpha                          P0-PUSCH-AlphaSetId,
    transformPrecoder                       ENUMERATED {enabled}
            OPTIONAL,      -- Need S
    nrofHARQ-Processes                      INTEGER(1..16),
    repK                                    ENUMERATED {n1, n2, n4, n8},
    repK-RV                                 ENUMERATED {s1-0231, s2-0303, s3-
0000}                   OPTIONAL,      -- Cond RepK
    periodicity                             ENUMERATED {
                                    sym2, sym7, sym1x14, sym2x14,
sym4x14, sym5x14, sym8x14, sym10x14, sym16x14, sym20x14,
                                    sym32x14, sym40x14, sym64x14,
sym80x14, sym128x14, sym160x14, sym256x14, sym320x14, sym512x14,
                                    sym640x14, sym1024x14, sym1280x14,
sym2560x14, sym5120x14,
                                    sym6, sym1x12, sym2x12, sym4x12,
sym5x12, sym8x12, sym10x12, sym16x12, sym20x12, sym32x12,
```

```
                                        sym40x12, sym64x12, sym80x12,
        sym128x12, sym160x12, sym256x12, sym320x12, sym512x12, sym640x12,

                                        sym1280x12, sym2560x12

                                        },

        configuredGrantTimer            INTEGER (1..64)
                    OPTIONAL,    -- Need R

        rrc-ConfiguredUplinkGrant               SEQUENCE {
            timeDomainOffset                INTEGER  (0..5119),

            timeDomainAllocation            INTEGER  (0..15),

            frequencyDomainAllocation       BIT STRING (SIZE(18)),

        antennaPort                         INTEGER   (0..31),

        dmrs-SeqInitialization          INTEGER   (0..1)
            OPTIONAL,  -- Cond NoTransformPrecoder
        precodingAndNumberOfLayers          INTEGER   (0..63),

        srs-ResourceIndicator           INTEGER   (0..15),

            mcsAndTBS                       INTEGER (0..31),

            frequencyHoppingOffset          INTEGER (1..
maxNrofPhysicalResourceBlocks-1)            OPTIONAL,     -- Need M

            pathlossReferenceIndex          INTEGER (0..maxNrofPUSCH-
PathlossReferenceRSs-1),

            ...

        }
                OPTIONAL -- Need R

    }


CG-UCI-OnPUSCH ::= CHOICE {

    dynamic                             SEQUENCE (SIZE (1..4)) OF BetaOffsets,

    semiStatic                          BetaOffsets

    }


-- TAG-CONFIGUREDGRANTCONFIG-STOP

-- ASN1STOP
```

| ConfiguredGrantConfig field descriptions |
|---|
| **antennaPort**<br>Indicates the anntenna port(s) to be used for this configuration, and the maximum bitwidth is 5. See TS 38.214, section 6.1.2, and TS 38.212, section 7.3.1. |
| **cg-DMRS-Configuration**<br>DMRS configuration, corresponds to L1 parameter 'UL-TWG-DMRS' (see TS 38.214, section 6.1.2). |

(continued)

| ConfiguredGrantConfig field descriptions |
| --- |
| **configuredGrantTimer**<br>Indicates the initial value of the configured grant timer (see TS 38.321) in number of periodicities. |
| **frequencyDomainAllocation**<br>Indicates the frequency domain resource allocation, see TS 38.214, section 6.1.2, and TS 38.212, section 7.3.1). |
| **frequencyHopping**<br>Frequency hopping. If not configured, frequency hopping is not configured. |
| **frequencyHoppingOffset**<br>Enables intra-slot frequency hopping with the given frequency hopping offset. Frequency hopping offset used when frequency hopping is enabled. Corresponds to L1 parameter 'Frequency-hopping-offset' (see TS 38.214, section 6.1.2). |
| **mcs-Table**<br>Indicates the MCS table the UE shall use for PUSCH without transform precoding. If the field is absent the UE applies the value 64QAM. |
| **mcs-TableTransformPrecoder**<br>Indicates the MCS table the UE shall use for PUSCH with transform precoding. If the field is absent the UE applies the value 64QAM. |
| **mcsAndTBS**<br>The modulation order, target code rate and TB size (see TS38.214, section 6.1.2). |
| **nrofHARQ-Processes**<br>The number of HARQ processes configured. It applies for both Type 1 and Type 2. See TS 38.321, section 5.4.1. |
| **p0-PUSCH-Alpha**<br>Index of the P0-PUSCH-AlphaSet to be used for this configuration. |
| **periodicity**<br>Periodicity for UL transmission without UL grant for type 1 and type 2. Corresponds to L1 parameter 'UL-TWG-periodicity' (see TS 38.321, section 5.8.2).<br>The following periodicities are supported depending on the configured subcarrier spacing [symbols]:<br>15kHz: 2, 7, n*14, where n={1, 2, 4, 5, 8, 10, 16, 20, 32, 40, 64, 80, 128, 160, 320, 640}<br>30kHz: 2, 7, n*14, where n={1, 2, 4, 5, 8, 10, 16, 20, 32, 40, 64, 80, 128, 160, 256, 320, 640, 1280}<br>60kHz with normal CP: 2, 7, n*14, where n={1, 2, 4, 5, 8, 10, 16, 20, 32, 40, 64, 80, 128, 160, 256, 320, 512, 640, 1280, 2560}<br>60kHz with ECP: 2, 6, n*12, where n={1, 2, 4, 5, 8, 10, 16, 20, 32, 40, 64, 80, 128, 160, 256, 320, 512, 640, 1280, 2560}<br>120kHz: 2, 7, n*14, where n={1, 2, 4, 5, 8, 10, 16, 20, 32, 40, 64, 80, 128, 160, 256, 320, 512, 640, 1024, 1280, 2560, 5120}<br>(see 38.214, Table 6.1.2.3-1) |
| **powerControlLoop To Use**<br>Closed control loop to apply. Corresponds to L1 parameter 'PUSCH-closed-loop-index' (see TS 38.213, section 7.7.1). |
| **rbg-Size**<br>Selection between config 1 and config 2 for RBG size for PUSCH. When the field is absent the UE applies the value config1. Note: rbg-Size is used when the transformPrecoder parameter is disabled. |
| **repK-RV** |

(continued)

| *ConfiguredGrantConfig field descriptions* |
|---|
| If repetitions is used, this field indicates the redundancy version (RV) sequence to use. See TS 38.214, section 6.1.2. |
| *repK* <br> The number or repetitions of K. |
| *resourceAllocation* <br> Configuration of resource allocation type 0 and resource allocation type 1. For Type 1 UL data transmission without grant, "resourceAllocation" should be resourceAllocationType0 or resourceAllocationType1. |
| *rrc-ConfiguredUplinkGrant* <br> Configuration for "configured grant" transmission with fully RRC-configured UL grant (Type1).If this field is absent the UE uses UL grant configured by DCI addressed to CS-RNTI (Type2). Type 1 confgured grant may be configured for UL or SUL, but not for both simultaneously. |
| *timeDomainAllocation* <br> Indicates a combination of start symbol and length and PUSCH mapping type, see TS 38.214, section 6.1.2 and TS 38.212, section 7.3.1. |
| *timeDomainOffset* <br> Offset related to SFN=0, see TS 38.321, section 5.8.2. |
| *transformPrecoder* <br> Enable transformer precoder for type1 and type2. If the field is absent, the UE considers the transformer precoder is disabled, see 38.214, section 6.1.3. |
| *uci-OnPUSCH* <br> Selection between and configuration of dynamic and semi-static beta-offset. For Type 1 UL data transmission without grant, *uci-OnPUSCH* should be set to *semiStatic.* |

| Conditional Presence | Explanation |
|---|---|
| *RepK* | *The field is mandatory present if repK is set to n2, n4,or n8. It is not present if repK is set to n1.* |

**Base station**

The base station may be a gNB, an eNB, a coordinator, etc. A simplified example of BS 600 is shown in Fig. 2.2.1. The BS 600 may always communicate in uplink (UL) or downlink (DL) with the UE 100 (and, in case, with other UEs), e.g., according to a communication standard (e.g., LTE, 4g, 45, etc.).

The base station, BS 600 may comprise at least one of:

a reception unit 610 to receive, [e.g., in uplink, UL,] data packets 122t, 126t, [e.g., in a redundancy version, RV, and/or to a base station] according to a scheduling which allocates transmission resources [e.g., slots, frequencies, etc.] in a determined time period to at least one UE (e.g., UE 100);

a scheduler 630 configured to define a scheduling for the at least one UE 100;

a transmit unit 620 to transmit, [e.g., in downlink, DL,] at least scheduling information 622 to the at least one UE 100.

In example, the scheduler 630 may be configured to define and/or adapt the scheduling on the basis of at least feedback information, from the UE, regarding the delay or jitter information and/or a scheduling modification request, from the UE, based on delay or jitter information [e.g., according to the UE measurements]. All this information may be indicated with 313.

The scheduler 630 may be configured to update the length of the time period, e.g., on the basis of a feedback from the UE and/or on the basis of a request from the UE and/or on the basis of delay or jitter information from the UE. The scheduler 630 may be configured to update the index of the time period and/or to shift the time period, e.g., on the basis of a feedback from the UE and/or on the basis of a request from the UE and/or on the basis of delay or jitter information from the UE.

The scheduler 630 nay be configured to define and/or modify the scheduling period and/or the scheduling on the basis of at least one of:

delay or jitter trend information and/or a request based on the trend from the UE;

a scheduling/configuration modification request, including at least one of:
a request of a particular scheduling period from the UE;

a request of a particular shifting from the UE;

a request of a particular updating of the length of the period from the UE;
a value of the trend of the delay or jitter as measured by the UE;

an indication of the jitter trend information in respect to the length of the period.

Other aspects of the scheduler 630 and/or BS 600 may be understood from the explanations above regarding the UE 100 (as the UL and/or DL and/or signalling transmissions may be performed with the BS 600 and/or on the basis of the scheduling defined by the scheduler 630.

In some examples (e.g., embodiment E2* discussed above), the BS 600 may be configured to transmit signalling regarding the transmission configuration. The signalling may be at least partially based on the at least one of the delay or delay or jitter information (e.g., 146), scheduling modification request, configuration modification request, and feedback information as transmitted from the UE to the BS. Accordingly, the BS may modify the transmission configuration and/or the scheduling.

In addition or alternative, the BS may transmit signalling regarding the transmission configuration, the signalling being at least partially based on measurements performed by the BS or by another device associate to the BS (e.g., another device at the network side).

In addition or alternative, the BS 600 may update the scheduling (e.g., by signalling values k1 and/or k2) to the UE.

## Remote system

Fig. 2.2.2 shows a unit 700 including the UE 100 (some elements not being shown) and the local external device 119. The external device 119 may include a sensor 702 acquiring physical measurements on the environment (e.g., any of electrical, mechanical, chemical magnitude(s), etc.). The external device 119 may include a processor 705. The external device 119 may include a timing (clock) module 708, which is in principle different from the timing (clock) module 108 of the UE 100. The external device 119 may (e.g., periodically) send (e.g., through electrical connections, e.g., without wireless connections) data packets 122, 126 to the buffer 102 of the UE 100.

The unit 700 may receive the data packets 122, 126 from the external device 119 and retransmit them (as data packets 121t, 126t) to a remote unit 800 through the BS 600 (in Fig. 2.2.2 only one BS 600 is shown, but it is clear that a plurality of BSs may be involved, as a common network may be used). Techniques for transmitting the data packets 122t, 126t are discussed above.

The remote unit 800 may retransmit data packets (e.g., as packets 122tt, 126tt) to the unit 700 through the BS 600 and/or more in general through the network.

In some cases, the unit 700 may be a remote controller. In this case, the data packets 122, 126 may refer to commands input by a user (e.g., through a joystick, an input/output, I/O, unit, an haptic interface, etc.), while the remote unit 800 may be a controlled system (e.g., an actuator which is moved according to the user's commands). In some cases, it is the opposite: the unit 700, in this case, may obtain, at the device 119, data packets 122, 126 associated to feed ack measurements of the controlled physical system.

Hence, the units 700 and 800 form a remote system 900. The remote system 900 may be, for example, an internet-of-things, IoT, system.

## Further examples

Generally, examples may be implemented as a computer program product with program instructions, the program instructions being operative for performing one of the methods when the computer program product runs on a computer. The program instructions may for example be stored on a machine readable medium. Other examples comprise the computer program for performing one of the methods described herein, stored on a machine-readable carrier. In other words, an example of method is, therefore, a computer program having a program-instructions for performing one of the methods described herein, when the computer program runs on a computer. A further example of the methods is, therefore, a data carrier medium (or a digital storage medium, or a computer-readable medium) comprising, recorded thereon, the computer program for performing one of the methods described herein. The data carrier medium, the digital storage medium or the recorded medium are tangible and/or non-transitionary, rather than signals which are intangible and transitory. A further example of the method is, therefore, a data stream or a sequence of signals representing the computer program for performing one of the methods described herein. The data stream or the sequence of signals may for example be transferred via a data communication connection, for example via the Internet. A further example comprises a processing means, for example a computer, or a programmable logic device performing one of the methods described herein. A further example comprises a computer having installed thereon the computer program for performing one of the methods described herein. A further example comprises an apparatus or a system transferring (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver. In some examples, a programmable logic device (for example, a field programmable gate array) may be used to perform some or all of the functionalities of the methods described herein. In some examples, a field programmable gate array may cooperate with a microprocessor in order to perform one of the methods described herein. Generally, the methods may be performed by any appropriate hardware apparatus. The above described examples are merely illustrative for the principles discussed above. It is understood that modifications and variations of the arrangements and the details described herein will be apparent. It is the intent, therefore, to be limited by the scope of the claims and not by the specific details presented by way of description and explanation of the examples herein. Equal or equivalent elements or elements with equal or equivalent functionality are denoted in the following description by equal or equivalent reference numerals even if occurring in different figures.

## Some aspects of the present technique

Examples discusses above and further examples of the present technique are here identified.

In examples above, some aspects relate to a user equipment, UE, including

a buffer for periodically receiving data packets [e.g., a first data packet in a first current period, and second subsequent data packet in a subsequent time period]; and/or

a transmission unit to transmit, [e.g., in uplink, UL,] the data packets [e.g., in a redundancy version, RV, and/or to a base station, BS] according to a scheduling which allocates transmission resources [e.g., slots, frequencies, etc.] in a determined [e.g., periodic] time period; and/or

a jitter determiner configured to determine a jitter information [e.g., a trend information on the jitter, i.e. trend jitter information] between the reception of a data packet in the buffer and the transmission of the data packet [e.g., one RV, e.g., in one resource and/or configuration and/or time slot];

[in some examples, the transmission unit may be configured to modify the [e.g., UL] transmission configuration and/or transmit in UL information regarding the jitter information and/or transmit a scheduling modification request so as to modify the transmission configuration, such as it switches from a first configuration to a second configuration].

[the time period may be configurable, e.g., by the BS] [e.g., so as to be shifted in time and/or its length being modified, e.g., according to the UE measurements]

[In examples above and/or below, the time periods of the transmissions are not necessarily the same of the time period for the periodic reception of the data packets, e.g., at least by virtue of the UE having a timing (clock) module different from the timing (clock) module of the external device inserting the data packets onto the buffer, so that the timings of the UE and of the external device inserting the data packets onto the buffer drift]

In examples above, some aspects relate to a user equipment, UE, including

a buffer for periodically receiving data packets [e.g., a first data packet in a first current period, and second subsequent data packet in a subsequent time period]; and/or

a transmission unit to transmit, [e.g., in uplink, UL], the data packets [e.g., in a redundancy version, RV, and/or to a base station, BS] according to a scheduling which allocates transmission resources [e.g., slots, frequencies, etc.] in a determined [e.g., periodic] time period, the time period being configurable [e.g., by the BS] [e.g., so as to be shifted in time and/or its length being modified][the time period of the transmission being not necessarily the same of the time period for the periodic reception of the data packets, e.g., at least by virtue of the UE having a timing (clock) module different from the timing (clock) module of the external device inserting the data packets onto the buffer, so that the timings of the UE and of the external device inserting the data packets onto the buffer drift, and this may constitute a problem solved by the present techniques]; and/or

a jitter determiner configured to determine a jitter information [e.g., a jitter trend information] between the reception of a data packet in the buffer and the transmission of the data packet [e.g., one RV, e.g., in one resource and/or configuration and/or time slot][e.g., to the BS], and/or

wherein the transmission unit is configured to transmit [e.g., in UL] the jitter information and/or a scheduling/-configuration modification request so as to modify the transmission configuration and/or the scheduling.

[The UE above may send feedback information regarding the jitter, for example.]

In examples above, some aspects relate to a unit comprising the UE as above and/or below and an external device configured to insert in the buffer data packet to be transmitted by the transmission unit of the UE, wherein the UE has a first timing (clock) module and the external device has a second timing (clock) module which is different from the first timing (clock) module [the timing of the insertion in the buffer may be theoretically the same as the time for transmitting by the UE, but at least by virtue of the drifts between the timings of the UE and the external device the timings actually do not coincide].

In examples above, some aspects relate to a base station, BS (e.g., gNB, e.g., for receiving data [e.g., in UL] from a UE) or a network coordinator [e.g., for vehicle to vehicle communications and/or user to user communications, comprising:

a reception unit to receive, [e.g., in uplink, UL,] data packets [e.g., in a redundancy version, RV, and/or to a base station] according to a scheduling which allocates transmission resources [e.g., slots, frequencies, etc.] in a determined time period to at least one UE; and/or

a scheduler configured to define a scheduling for the at least one UE; and/or

a transmit unit to transmit, [e.g., in downlink, DL,] at least scheduling information to the at least one UE; and/or

wherein the scheduler is configured to define and/or adapt the scheduling on the basis of at least feedback information, from the UE, regarding the jitter information and/or a scheduling modification request, from the UE, based on jitter information [e.g., according to the UE measurements].

[The UE may also be configured to receive in [e.g., UL] the transmissions from the UE in a way compatible to properly receive and/or decode the data from the UE]

[In examples above and below, the UE may generate the RVs from the arrived data packet]

The BS as above, wherein the scheduler may be configured to update the length of the time period, e.g., on the basis of a feedback from the UE and/or on the basis of a request from the UE and/or on the basis of jitter information from the UE. The BS as above, wherein the scheduler may be configured to update the index of the time period and/or to shift the time period, e.g., on the basis of a feedback from the UE and/or on the basis of a request from the UE and/or on the basis of jitter information from the UE.

In examples above, some aspects relate to a system comprising a BS and at least one UE, wherein:

the UE includes:
a buffer for periodically receiving data packets; and/or
a transmission unit to transmit [e.g., in uplink, UL] the data packets [e.g., in a redundancy version, RV, and/or to a base station] according to a scheduling which allocates transmission resources [e.g., slots, frequencies, etc.] in a determined time period; and/or

the BS includes:

a scheduler configured to define a scheduling for the at least one UE, wherein the scheduler is configured to define and/or adapt the scheduling on the basis of the jitter between the reception of a data packet in the buffer of the UE and the transmission of the data packet from the UE [e.g., of a RV of the data packet] [e.g., on the basis of feedback or request(s) from the UE] [e.g., on the basis of at least feedback information, from the UE, regarding the jitter information and/or a scheduling modification request, from the UE, based on jitter information] [the BS may be as above and/or the UE may be as above].

[Another possibility is to substitute the BS with a network coordinator, which may be another UE]

In examples above, some aspects relate to a UE [e.g., as any of the above] for the transmission [e.g., in UL to a BS and/or to a network coordinator], configured to:

measure [e.g., by the jitter determiner] a jitter trend information [e.g., the modification of the jitter between the current period and the previous period or an average, e.g., a weighted average, of the previous jitters][e.g., the jitter being between the arrival in the buffer and the transmission in UL or to the network coordinator], and/or

provide the jitter trend information to the BS or network coordinator.

In examples above, some aspects relate to a UE [e.g., as any of the above] for the transmission [e.g., in UL to a BS and/or to a network coordinator], configured to:

measure [e.g., by the jitter determiner] a jitter trend information [e.g., the modification of the jitter between the current period and the previous period or an average, e.g., a weighted average, of the previous jitters] [e.g., the jitter being between the arrival in the buffer and the transmission in UL or to a network coordinator], and/or

provide a request based on the jitter trend information [e.g., to the BS and/or network coordinator], the request concerning the configuration and/or the scheduling and/or the time period, [e.g., the request of modifying the length and/or shifting the time period].

In examples above, some aspects relate to a UE [e.g., as any of the above] for the transmission [e.g., in UL to a BS and/or a network coordinator], configured to:

measure [e.g., by the jitter determiner] a jitter trend information [e.g., the modification of the jitter between the current period and the previous period or an average, e.g., a weighted average, of the previous jitters][e.g., the jitter being between the arrival in the buffer and the transmission [e.g., in UL to a BS and/or a network coordinator]], and/or

provide a feedback on the jitter trend information [e.g.to the BS] [e.g., a feedback on the severity of the jitter].

In examples above, some aspects relate to a UE [e.g., as any of the above] for the transmission in[e.g., in UL to a BS and/or a network coordinator], configured to:

measure [e.g., by the jitter determiner] a jitter trend information [e.g., the modification of the jitter between the current period and the previous period or an average, e.g., a weighted average, of the previous jitters][e.g., the jitter being between the arrival in the buffer and the transmission in UL and/or to a network coordinator], and/or

provide, as a feedback information [e.g., based on the jitter trend information] , information associated to at least one of the following scenarios:

| scenario | |
|---|---|
| Use case 1/Problem 1 | Missmatch between packet arrival and the machine clocks |
| Use case 2/Problem 2 | Delay due to packet congestion (congestion control mechanism) |
| Use case 3/Problem 3 | Factory automation with multiple machines clocks |
| Use case 4/Problem 4 | Synchronized machine access |

The UE may be further configured to:
request a particular scheduling period [e.g., SPS period] [e.g., to the BS and/or the network coordinator].
The UE may be further configured to:
request a particular shifting [e.g., by providing new_SPS_Index] [e.g., to the BS and/or the network coordinator].
The UE may be further configured to:
request a particular updating [e.g., by providing new_SPS_Period] of the length of the period [e.g., to the BS and/or the network coordinator].
The UE may be further configured to
provide a value of the jitter trend [e.g., to the BS and/or the network coordinator] [the jitter trend may be the increment on the jitter from the previous period to the current period and/or the increment on the jitter from an average regarding previous periods and the current period].
The UE may be further configured to
provide ratio_1 [which may be as in the description above] [e.g., to the BS and/or the network coordinator].
The UE may further comprise a lookup table, LUT, for providing a quantized version of the jitter information [e.g., of the jitter trend information][the LUT may have the values p1, p2, p3... stored so as to associate, to each range of the possible jitter information or jitter trend information, a quantized version thereof ], so as to provide the quantized version of the jitter information and/or jitter trend information [e.g., to provide the quantized version to the BS and to the network coordinator].
The UE may be further configured so as to, in case of determination of failure of the scheduling/modification, to perform a redundancy strategy.
The UE may be further configured, wherein a failure of the scheduling/modification is determined when no quantized version of the jitter information or jitter trend information is found (e.g., is not in the LUT)
The UE may be further configured, wherein a failure of the scheduling/modification is determined when the BS fails to modify the scheduling/modification [e.g., within a predetermined threshold].
The UE may be further configured, wherein a failure of the scheduling/modification is determined when the UE fails to obtain the jitter information or jitter trend information [e.g., within a predetermined threshold].
The UE may be further configured to estimate a hyper-period [e.g., as the least common multiple, LCM between the period as for the timing (clock) module of the UE and the period as for the timing (clock) module of the external device inserting the data packets onto the buffer]
The UE may be further configured to define the maximum allowed jitter between the length (e.g., sTTI) of the time slot for the first RV [and/or for a resource] and the length of the time period.
The UE may be further configured so that the number of configurations [and/or different allocations of resources] is associated to the length of the period and the maximum allowed jitter (e.g. the fraction between these values and/or the ceiling of the fraction, wherein the fraction may be, for example, the value of the hyper-period; other methods for calculating the hyper period may be carried out)
The UE may be further configured so that the number of configurations is associated to the hyper period.
The UE may be further configured so that different configurations have different resources for transmitting different RVs in different time slots.
The UE may be further configured so that the configurations are such that, for each time slot (e.g., sTTI), only one configuration transmits a data packet [e.g., a RV].
In examples above, some aspects relate to a BS, [e.g., as above] or a network coordinator comprising a scheduler configured to define and/or modify the scheduling period [e.g., SPS period] on the basis of at least one of:

jitter trend information and/or a request based on the trend from the UE; and/or

a scheduling/configuration modification request, such as:
a request of a particular scheduling period [e.g., SPS period] from the UE; and/or

a request of a particular particular shifting [e.g., by providing new_SPS_Index] from the UE; and/or

a request of a particular updating [e.g., by providing new_SPS_Period] of the length of the period from the UE; and/or
a value of the trend of the jitter as measured by the UE; and/or

an indication of ratio_1 as in the description above [or, for example, an indication of the trend in respect to the length of the period].

The BS or network coordinator may be further configured to receive the transmission from a UE.
In examples above, some aspects relate to a UE configured to carry out, as redundancy strategy [the redundancy strategy may be triggered by the determination of failure of the scheduling/modification and/or autonomously, e.g., by default]:

perform transmissions [e.g., of first and/or second RVs] according to a periodic scheduling so that at least one first and second RVs of a first data packet are scheduled to be transmitted in the first and second scheduled resources of a first period and at least one first and second RVs of a subsequent data packet are to be transmitted in the first and second scheduled resources of a subsequent period; and/or

in case a first data packet arrives in the buffer after a first maximum jitter threshold [e.g., in time for transmitting the second RV but not in time for transmitting the first RV], reallocating the transmission of the first RV in the first resource in the subsequent period [without transmitting it in the first RV of the first period].

[The first and second scheduled resources may be, for example, scheduled resources, such as time slots, of a first and/or second configuration. The same may apply above and/or below]

[Hereinbelow and above, the first and second resources may be such that the first resource is in a time slot before the time slot of the second resource]

The UE may be further configured to perform, as redundancy strategy:
in case the subsequent data packet arrives in the buffer after the first maximum jitter threshold but before a second jitter threshold [e.g., in time for transmitting the second RV but not in time for the first RV], transmit the first RV of the first data packet in the first resource of the subsequent period.

[Below and above, the first jitter threshold may be smaller than the second jitter threshold]

The UE may be further configured to perform, as redundancy strategy:
in case the subsequent data packet arrives in the buffer before the first maximum jitter threshold, transmit the first RV of the subsequent data packet in the first resource of the subsequent period instead of the first RV of the first data packet.
The UE may be further configured to perform, as a redundancy strategy:
in case the first data packet arrives in the buffer after the first maximum jitter threshold [e.g., in time for transmitting the second RV but not in time for the first RV] but before a second maximum jitter threshold [e.g., in time for transmitting the second RV], to actually transmit the second RV of the first data packet.
In examples above, some aspects relate to a UE configured to perform, as a redundancy strategy:
perform transmissions [e.g., of first and/or second RVs] according to a periodic scheduling so that at least one first and second RVs of a first data packet are scheduled to be transmitted in the first and second scheduled resources of a first period and at least one first and second RVs of a subsequent data packet are to be transmitted in the first and second scheduled resources of a subsequent period; and/or
in case a first data packet arrives in the buffer after a first maximum jitter threshold [e.g., in time for transmitting the second RV but not in time for transmitting the first RV], reallocating the transmission of the first RV in the second resource in the same first period [e.g., without transmitting the second RV in the first period].
The UE may be further configured to perform, as redundancy strategy:
reallocate the transmission of the second RV in the first resource in the subsequent period.
The UE may be further configured to perform, as a redundancy strategy:
in case the subsequent data packet arrives in the buffer before the first maximum jitter threshold [e.g., in time for transmitting the first RV], avoid the transmission of the first RV of the first data packet and actually transmit the first RV of the subsequent data packet in the first resource.
In examples above, some aspects relate to a UE [e.g., as any of the UEs above] configured to perform, as redundancy strategy, transmit a plurality of RVs of the same data packet periodically arrived in a buffer, wherein at least one RV is a self-decodable RV and at least one RV is a non-self-decodable RV, configured to:
in case of late reception of a data packet after a first maximum jitter threshold for transmitting a first decodable RV but before a second maximum jitter threshold for transmitting a second non-decodable RV, to reallocate the transmission of the RVs so that:
at least one self-decodable RV is transmitted before at least one non-self-decodable RV.
The UE may be further configured to perform, as redundancy strategy:
reallocate a resource previously allocated to a non-self-decodable RV to a self-decodable RV in the same period [e.g., postponing or avoiding the transmission of the non-self-decodable RV].
The UE may be further configured to perform, as redundancy strategy:
in case in the subsequent period the subsequent data packet arrives in the buffer in time [e.g., before the first maximum jitter], transmit the first RV of the subsequent data packet instead of reallocating the resources for the non-self-decodable RV of the previous data packet.

A method may include

in a buffer, periodically receiving data packets [e.g., a first data packet in a first current period, and second subsequent data packet in a subsequent time period]; and/or

in a transmission unit, transmitting, [e.g., in uplink, UL,] the data packets [e.g., in a redundancy version, RV, and/or to a base station, BS] according to a scheduling which allocates transmission resources [e.g., slots, frequencies, etc.] in a determined [e.g., periodic] time period; and/or

in a jitter determiner, determining a jitter information [e.g., a trend information on the jitter, i.e. trend jitter information] between the reception of a data packet in the buffer and the transmission of the data packet [e.g., one RV, e.g., in one resource and/or configuration and/or time slot].

A method may include

in a buffer, periodically receiving data packets [e.g., a first data packet in a first current period, and second subsequent data packet in a subsequent time period]; and/or

in a transmission unit, transmitting, [e.g., in uplink, UL], the data packets [e.g., in a redundancy version, RV, and/or to a base station, BS] according to a scheduling which allocates transmission resources [e.g., slots, frequencies, etc.] in a determined [e.g., periodic] time period, the time period being configurable [e.g., by the BS] [e.g., so as to be shifted in time and/or its length being modified][the time period of the transmission being not necessarily the same of the time period for the periodic reception of the data packets, e.g., at least by virtue of the UE having a timing (clock) module different from the timing (clock) module of the external device inserting the data packets onto the buffer, so that the timings of the UE and of the external device inserting the data packets onto the buffer drift, and this may constitute a problem solved by the present techniques]; and/or

in a jitter determiner, determining a jitter information [e.g., a jitter trend information] between the reception of a data packet in the buffer and the transmission of the data packet [e.g., one RV, e.g., in one resource and/or configuration and/or time slot][e.g., to the BS],

wherein the transmission transmits [e.g., in UL] the jitter information and/or a scheduling/configuration modification request so as to modify the transmission configuration and/or the scheduling.

[The UE above may send feedback information regarding the jitter, for example]

A method may include

receiving, [e.g., in uplink, UL,] data packets [e.g., in a redundancy version, RV, and/or to a base station] according to a scheduling which allocates transmission resources [e.g., slots, frequencies, etc.] in a determined time period to at least one UE; and/or

refining a scheduling for the at least one UE; and/or

transmitting , [e.g., in downlink, DL,] at least scheduling information to the at least one UE; and/or

defining and/or adapting the scheduling on the basis of at least feedback information, from the UE, regarding the jitter information and/or a scheduling modification request, from the UE, based on jitter information [e.g., according to the UE measurements].

A storage unit may be configured to store instructions which, when executed by a processor, cause the processor to perform a method and/or to implement any of the functions above.

| Abbreviation | Meaning |
|---|---|
| BS | Base Station |
| CBR | Channel Busy Ratio |

(continued)

| Abbreviation | Meaning |
| --- | --- |
| D2D | Device-to-Device |
| EN | Emergency Notification |
| EP | Exceptional Pool |
| eNB | Evolved Node B (base station) (may be the BS below) |
| FDM | Frequency Division Multiplexing |
| LTE | Long-Term Evolution |
| PC5 | Interface using the Sidelink Channel for D2D communication |
| PPPP | ProSe per packet priority |
| PPPR | ProSe per packet reliability |
| PRB | Physical Resource Block |
| ProSe | Proximity Services |
| RA | Resource Allocation |
| SCI | Sidelink Control Information |
| SL | sidelink |
| sTTI | Short Transmission Time Interval |
| TDM | Time Division Multiplexing |
| TDMA | Time Division Multiple Access |
| UE | User Entity (User Terminal) |
| URLLC | Ultra-Reliable Low-Latency Communication |
| V2V | Vehicle-to-vehicle |
| V2I | Vehicle-to-infrastructure |
| V2P | Vehicle-to-pedestrian |
| V2N | Vehicle-to-network |
| V2X | Vehicle-to-everything, i.e., V2V, V2I, V2P, V2N |
| TTI | Transmit time interval also known as a subframe (i.e., 1ms) |
| Slot | A subframe (1 ms) may contain one or more slots (1 for 15 kHz) |

**Claims**

1.  A user equipment, UE, (100) for transmitting wireless transmissions, wherein the UE is adapted to:

    receive data packets (122, 126) from an external device (119) which is a local device;
    transmit the data packets (142) according to a scheduling which allocates transmission resources in a determined time period (P);
    determine a delay information (146) between the reception of a data packet (122, 126) in the buffer (102) and the transmission of the data packet (122, 126); and
    modify the transmission configuration to switch from a first active configuration to a second active configuration, wherein the active configurations are such that, for each time slot, only one active configuration transmits a data packet including an initial transmission and all the possible redundancy versions, RVs, of the data packet, wherein the UE is to receive a definition of the first active configuration (conf1) and second active configuration (conf2) in a BS's signalling,
    wherein the UE is configured, when operating at the first active configuration and in case of late arrival of a data packet, to switch to the second active configuration for transmitting the late arrived data packet.

2.  The UE of claim 1, wherein different active configurations have different resources for transmitting different redundancy versions, RVs, in different time slots.

3.  The UE of any of claims 1-2, wherein the UE is to choose between the first and second active configurations so as to switch from one configuration to the chosen configuration without transmitting a request to a BS.

4.  The UE of any of the preceding claims, wherein the UE is, when switching to the second active configuration, to reallocate a redundancy version, RV, of a data packet, to a resource of the second active configuration.

5. The UE of any of the preceding claims, wherein the scheduling provides for a configuration time offset (242) of the second active configuration with respect to the first active configuration, so that, if a data packet arrives too late for being transmitted in the first active configuration but before the configuration time offset, the UE reallocates the data packet, or at least a redundancy version thereof, to a resource of the second active configuration, and switches to the second active configuration.

6. The UE of claim 5, wherein, the UE is, after switching to the second active configuration, to continue transmitting with the second active configuration up to a new necessity for switching to the first active configuration or to a different active configuration based on a subsequent late arrival of a data packet.

7. The UE of any of the preceding claims, wherein the first and second active configurations share a same time resource at the same frequency, the second active configurations is a shadow active configuration and the UE only transmits according to the first active configuration, wherein the UE is to switch to the second active configuration in case a data packet arrives too late for being transmitted according to the first active configuration.

8. The UE of any of the preceding claims, wherein at least one RV is self-decodable and at least one RV is non-self-decodable, wherein, following the late arrival of a data packet, a competition between a self-decodable RV and non-self-decodable RV is solved by transmitting the self-decodable RV.

9. The UE of claim any of the preceding claims, adapted to perform:
in case a data packet (122") does not arrive in time for a transmission (122t") at a current slot (S122"0) but in time for a transmission in a subsequent slot (S122"3), transmit the data packet (122") in the subsequent slot (S122"3), wherein the UE is, when transmitting the data packet (122") in the subsequent slot (S122"3), to postpone the transmission of another data packet scheduled for the subsequent slot (S122"3).

10. The UE of any of the preceding claims, wherein the UE is to

provide a ratio Ratio_1 = $(\Delta T_1 - \Delta T_2)/period$ ,
wherein $\Delta T_1$ is a first difference between the arrival of a first data packet (122") and the subsequent timing occasion (TO122"0), wherein $\Delta T_2$ is a second difference between the arrival of a second, subsequent data packet (122''') and the subsequent timing occasion (TO122'''0) for transmitting the second data packet (122'''), wherein "period" is the length of the current determined period (122), to provide a value of the delay trend.

11. The UE of any of claims 1-10, wherein the UE is to transmit the data packets according to a semi persistent scheduling, SPS.

12. A method for a user equipment, UE, the method including:

periodically receiving data packets from a local, external device;
transmitting the data packets according to a scheduling which allocates transmission resources in a time period, the time period being configurable; and
determining a delay information between the reception of a data packet and the transmission of the data packet, modifying the transmission configuration to switch from a first active configuration to a second active configuration, so as, when operating at the first active configuration and in case of late arrival of a data packet, to switch to the second active configuration for transmitting the late arrived data packet,
wherein the active configurations are such that, for each time slot, only one active configuration transmits a data packet including an initial transmission and all the possible redundancy versions, RVs, of the data packet, so that the UE receives a definition of the first active configuration (conf1) and second active configuration (conf2) in a BS's signalling.

13. A storage unit storing instructions which, when executed by a processor, cause the processor to perform the method of claim 12.

**Patentansprüche**

1. Ein Nutzergerät, UE, (100) zum Senden von drahtlosen Übertragungen, wobei das UE angepasst ist zum:

Empfangen von Datenpaketen (122, 126) von einer externen Vorrichtung (119), die eine lokale Vorrichtung ist;
Senden der Datenpakete (142) gemäß einer Zeitplanung, die Übertragungsressourcen in einer bestimmten Zeitperiode (P) zuweist;
Bestimmen einer Verzögerungsinformation (146) zwischen dem Empfang eines Datenpakets (122, 126) in dem Puffer (102) und der Übertragung des Datenpakets (122, 126); und
Modifizieren der Übertragungskonfiguration, um von einer ersten aktiven Konfiguration zu einer zweiten aktiven Konfiguration zu schalten,
wobei die aktiven Konfigurationen derart sind, dass für jeden Zeitschlitz nur eine aktive Konfiguration ein Datenpaket sendet, das eine anfängliche Übertragung und alle möglichen Redundanzversionen, RV, des Datenpakets umfasst, wobei das UE eine Definition der ersten aktiven Konfiguration (conf1) und der zweiten aktiven Konfiguration (conf2) in einer BS-Signalisierung empfangen soll,
wobei das UE dazu konfiguriert ist, wenn dasselbe mit der ersten aktiven Konfiguration arbeitet und im Fall einer späten Ankunft eines Datenpakets, zum Senden des spät angekommenen Datenpakets zu der zweiten aktiven Konfiguration zu schalten.

2. Das UE gemäß Anspruch 1, wobei unterschiedliche aktive Konfigurationen unterschiedliche Ressourcen zum Senden unterschiedlicher Redundanzversionen, RV, in unterschiedlichen Zeitschlitzen aufweisen.

3. Das UE gemäß einem der Ansprüche 1 bis 2, wobei das UE zwischen der ersten und der zweiten aktiven Konfiguration wählen soll, um von einer Konfiguration zu der gewählten Konfiguration zu schalten, ohne eine Anforderung an ein BS zu senden.

4. Das UE gemäß einem der vorhergehenden Ansprüche, wobei das UE, wenn dasselbe zu der zweiten aktiven Konfiguration schaltet, eine Redundanzversion, RV, eines Datenpakets einer Ressource der zweiten aktiven Konfiguration neu zuweisen soll.

5. Das UE gemäß einem der vorhergehenden Ansprüche, wobei die Zeitplanung einen Konfigurationszeitversatz (242) der zweiten aktiven Konfiguration in Bezug auf die erste aktive Konfiguration bereitstellt, so dass, falls ein Datenpaket zu spät, um in der ersten aktiven Konfiguration gesendet zu werden, aber vor dem Konfigurationszeitversatz ankommt, das UE das Datenpaket oder zumindest eine Redundanzversion desselben einer Ressource der zweiten aktiven Konfiguration neu zuweist und zu der zweiten aktiven Konfiguration schaltet.

6. Das UE gemäß Anspruch 5, wobei das UE nach dem Schalten zu der zweiten aktiven Konfiguration das Senden mit der zweiten aktiven Konfiguration fortsetzen soll, bis zu einer neuen Notwendigkeit zum Schalten zu der ersten aktiven Konfiguration oder zu einer anderen aktiven Konfiguration basierend auf einer nachfolgenden späten Ankunft eines Datenpakets.

7. Das UE gemäß einem der vorhergehenden Ansprüche, wobei die erste und die zweite aktive Konfiguration eine gleiche Zeitressource mit der gleichen Frequenz gemeinschaftlich verwenden, die zweite aktive Konfiguration eine aktive Schattenkonfiguration ist und das UE nur gemäß der ersten aktiven Konfiguration sendet, wobei das UE zu der zweiten aktiven Konfiguration schalten soll, falls ein Datenpaket zu spät ankommt, um gemäß der ersten aktiven Konfiguration gesendet zu werden.

8. Das UE gemäß einem der vorhergehenden Ansprüche, wobei zumindest eine RV selbstdecodierbar ist und zumindest eine RV nicht selbstdecodierbar ist, wobei nach der späten Ankunft eines Datenpakets eine Konkurrenz zwischen einer selbstdecodierbaren RV und einer nicht selbstdecodierbaren RV durch Senden der selbstdecodierbaren RV gelöst wird.

9. Das UE gemäß einem der vorhergehenden Ansprüche, das dazu angepasst ist, Folgendes durchzuführen:
falls ein Datenpaket (122") nicht rechtzeitig für eine Übertragung (122t") an einem aktuellen Schlitz (S122"0) aber rechtzeitig für eine Übertragung in einem nachfolgenden Schlitz (S122"3) ankommt, Senden des Datenpakets (122") in dem nachfolgenden Schlitz (S122"3), wobei das UE, wenn das Datenpaket (122") in dem nachfolgenden Schlitz (S122"3) gesendet wird, die Übertragung eines anderen Datenpakets, das für den nachfolgenden Schlitz (S122"3) geplant ist, verschieben soll.

**10.** Das UE gemäß einem der vorhergehenden Ansprüche, wobei das UE

ein Verhältnis Ratio_1 = $(\Delta T_1 - \Delta T_2)$/***period*** bereitstellen soll,
wobei $\Delta T_1$ eine erste Differenz zwischen der Ankunft eines ersten Datenpakets (122") und dem nachfolgenden Zeitgebungsanlass (TO122"0) ist, wobei $\Delta T_2$ eine zweite Differenz zwischen der Ankunft eines zweiten, nachfolgenden Datenpakets (122‴) und dem nachfolgenden Zeitgebungsanlass (TO122‴0) zum Senden des zweiten Datenpakets (122‴) ist, wobei "period" die Länge der aktuellen bestimmten Periode (122) ist, um einen Wert der Verzögerungstendenz bereitzustellen.

**11.** Das UE gemäß einem der Ansprüche 1-10, wobei das UE die Datenpakete gemäß einer semipersistenten Zeitplanung, SPS, senden soll.

**12.** Ein Verfahren für ein Nutzergerät, UE, wobei das Verfahren folgende Schritte aufweist:

periodisches Empfangen von Datenpaketen von einer lokalen, externen Vorrichtung;
Senden der Datenpakete gemäß einer Zeitplanung, die Übertragungsressourcen in einer Zeitperiode zuweist, wobei die Zeitperiode konfigurierbar ist; und Bestimmen einer Verzögerungsinformation zwischen dem Empfang eines Datenpakets und der Übertragung des Datenpakets,
Modifizieren der Übertragungskonfiguration, um von einer ersten aktiven Konfiguration zu einer zweiten aktiven Konfiguration zu schalten, um, wenn dasselbe mit der ersten aktiven Konfiguration arbeitet und im Fall einer späten Ankunft eines Datenpakets, zum Senden des spät angekommenen Datenpakets zu der zweiten aktiven Konfiguration zu schalten,
wobei die aktiven Konfigurationen derart sind, dass für jeden Zeitschlitz nur eine aktive Konfiguration ein Datenpaket sendet, das eine anfängliche Übertragung und alle möglichen Redundanzversionen, RV, des Datenpakets umfasst, so dass das UE eine Definition der ersten aktiven Konfiguration (conf1) und der zweiten aktiven Konfiguration (conf2) in einer BS-Signalisierung empfängt.

**13.** Eine Speichereinheit, die Anweisungen speichert, die, wenn dieselben durch einen Prozessor ausgeführt werden, den Prozessor veranlassen, das Verfahren gemäß Anspruch 12 durchzuführen.

## Revendications

**1.** Équipement utilisateur, UE, (100) destiné à transmettre des transmissions sans fil, dans lequel l'UE est adapté pour :

recevoir des paquets de données (122, 126) en provenance d'un dispositif externe (119) qui est un dispositif local ;
transmettre les paquets de données (142) selon une planification qui attribue des ressources de transmission dans une période de temps déterminée (P) ;
déterminer une information de retard (146) entre la réception d'un paquet de données (122, 126) dans la mémoire-tampon (102) et la transmission du paquet de données (122, 126) ; et
modifier la configuration de transmission pour passer d'une première configuration active à une deuxième configuration active,
dans lequel les configurations actives sont telles que, pour chaque intervalle de temps, une seule configuration active transmet un paquet de données incluant une transmission initiale et toutes les versions de redondance, RV, possibles du paquet de données, dans lequel l'UE doit recevoir une définition de la première configuration active (conf1) et de la deuxième configuration active (conf2) dans une signalisation d'une BS,
dans lequel l'UE est configuré, lorsqu'il fonctionne à la première configuration active et en cas d'arrivée tardive d'un paquet de données, pour passer à la deuxième configuration active pour transmettre le paquet de données arrivé en retard.

**2.** UE selon la revendication 1, dans lequel différentes configurations actives présentent différentes ressources pour transmettre différentes versions de redondance, RV, dans différents intervalles de temps.

**3.** UE selon l'une quelconque des revendications 1-2, dans lequel l'UE doit choisir entre les première et deuxième configurations actives de manière à passer d'une configuration à la configuration choisie sans transmettre une demande à une BS.

**4.** UE selon l'une quelconque des revendications précédentes, dans lequel l'UE doit, lorsqu'il passe à la deuxième configuration active, réattribuer une version de redondance, RV, d'un paquet de données, à une ressource de la deuxième configuration active.

**5.** UE selon l'une quelconque des revendications précédentes, dans lequel la planification prévoit un décalage temporel de configuration (242) de la deuxième configuration active par rapport à la première configuration active, de telle sorte que, si un paquet de données arrive trop tard pour être transmis dans la première configuration active mais avant le décalage temporel de configuration, l'UE réattribue le paquet de données, ou au moins une version de redondance de celui-ci, à une ressource de la deuxième configuration active, et passe à la deuxième configuration active.

**6.** UE selon la revendication 5, dans lequel l'UE doit, après être passé à la deuxième configuration active, continuer la transmission avec la deuxième configuration active jusqu'à une nouvelle nécessité de passer à la première configuration active ou à une configuration active différente sur la base d'une arrivée tardive suivante d'un paquet de données.

**7.** UE selon l'une quelconque des revendications suivantes, dans lequel les première et deuxième configurations actives partagent une même ressource temporelle à la même fréquence, la deuxième configuration active est une configuration active fictive et l'UE transmet seulement selon la première configuration active, dans lequel l'UE doit passer à la deuxième configuration active dans le cas où un paquet de données arrive en retard pour être transmis selon la première configuration active.

**8.** UE selon l'une quelconque des revendications suivantes, dans lequel au moins une RV est auto-décodable et au moins une RV est non auto-décodable, dans lequel, à la suite de l'arrivée tardive d'un paquet de données, une concurrence entre une RV auto-décodable et une RV non auto-décodable est résolue en transmettant la RV auto-décodable.

**9.** UE selon l'une quelconque des revendications suivantes, adapté pour réaliser :
dans le cas où un paquet de données (122") n'arrive pas à temps pour une transmission (122t") au niveau d'un intervalle actuel (S122"0) mais à temps pour une transmission dans un intervalle suivant (S122"3), la transmission du paquet de données (122") dans l'intervalle suivant (S122"3), dans lequel l'UE doit, lorsqu'il transmet le paquet de données (122") dans l'intervalle suivant (S122"3), reporter la transmission d'un autre paquet de données planifié pour l'intervalle suivant (S122"3).

**10.** UE selon l'une quelconque des revendications suivantes, dans lequel l'UE doit

fournir un rapport Ratio_1 = $(\Delta T_1 - \Delta T_2)/period$,
dans lequel $\Delta T_1$ est une première différence entre l'arrivée d'un premier paquet de données (122") et l'occasion temporelle suivante (TO122"0), dans lequel $\Delta T_2$ est une deuxième différence entre l'arrivée d'un deuxième paquet de données suivant (122"') et l'occasion temporelle suivante (TO122‴0) pour transmettre le deuxième paquet de données (122‴), dans lequel « period » est la longueur de la période déterminée actuelle (122), pour fournir une valeur de la tendance de retard.

**11.** UE selon l'une quelconque des revendications 1 à 10, dans lequel l'UE doit transmettre les paquets de données selon une planification semi-persistante, SPS.

**12.** Procédé pour un équipement utilisateur, UE, le procédé incluant le fait de :

recevoir périodiquement des paquets de données en provenance d'un dispositif externe local ;
transmettre les paquets de données selon une planification qui attribue des ressources de transmission dans une période de temps, la période de temps étant configurable ; et
déterminer une information de retard entre la réception d'un paquet de données et la transmission du paquet de données,
modifier la configuration de transmission pour passer d'une première configuration active à une deuxième configuration active, de manière à, lors d'un fonctionnement à la première configuration active et en cas d'arrivée tardive d'un paquet de données, passer à la deuxième configuration active pour transmettre le paquet de données arrivé en retard,
dans lequel les configurations actives sont telles que, pour chaque intervalle de temps, une seule configuration active transmet un paquet de données incluant une transmission initiale et toutes les versions de redondance, RV, possibles du paquet de données, de telle sorte que l'UE reçoit une définition de la première configuration active (conf1) et de la deuxième configuration active (conf2) dans une signalisation d'une BS.

13. Unité de stockage stockant des instructions qui, lorsqu'elles sont exécutées par un processeur, amènent le processeur à réaliser le procédé selon la revendication 12.

data packets (122, 126)
from external device (119)
(with different timing module
wit respect to timing module 102)

buffer
102

data
packets
102a
(122, 124)

time
stamps
102b

108

102a (122, 126)

antenna

114

102b

communic.
controller

jitter
determiner

timing
(clock)
module

110

142

143

146

147

106

122t,
126t

313

scheduling/reallocation unit

112

113

LUT

109

100

transmission unit
104

Fig. 1

Fig. 2

EP 3 857 944 B1

SPS period = 1 msec; event arrival period = 1.05 msec

message arrival time [msec]

Fig. 2.1.1

maximum jitter

SPS period = 1 msec; event arrival period = 1.123 msec

message arrival time [msec]

increasing minimum jitter

Fig. 2.1.2

Fig. 2.2.1

Fig. 2.2.2

Fig. 2.3.1

Fig. 2.3.2a

Fig. 2.3.2b

EP 3 857 944 B1

Fig. 2.4.1

Fig. 2.4.2

Fig. 2.4.3

Fig. 2.5.1

EP 3 857 944 B1

Fig. 2.5.2

UE 100 {

Receive data packets ~261

Measure delay or jitter ~262

Perform reallocation ~264 } the transmission configuration is modified

Transmit data packet according to the reallocation ~266

260

Fig. 2.6

UE 100

Measure jitter or delay — 310

Send feedback information delay or jitter information and/or modification request and/or another request (e.g. additional configuration request) — 312

— 313

BS 600

Receive jitter or delay information and/or modification request and/or another request (e.g. additional configuration request) — 314

Modify scheduling or configuration or new configuration — 316

the transmission configuration is modified

Signal modified scheduling or modified config. or new config. — 318

300

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02059638 A2
- WO 2016019555 A1